# FASCICULE DE BREVET EUROPEEN

(11) **EP 2 143 495 B1**
(45) Date de publication et mention de la délivrance du brevet: **12.12.2012**
(21) Numéro de dépôt: 07823065.3
(22) Date de dépôt: 08.10.2007
(51) Int. Cl.: B02C 23/00, B65F 1/16, B02C 18/00

(54) **CONTENEUR BROYEUR POUR LA COLLECTE SÉLECTIVE DE DÉCHETS SOLIDES URBAINS ET DIFFÉRENTES ADAPTATIONS SPÉCIALES CORRESPONDANT À CHACUN DES DIFFÉRENTS TYPES DE DÉCHETS, Y COMPRIS CONTENEUR BROYEUR DOMESTIQUE**
ZERKLEINERUNGSCONTAINER FÜR DAS SELEKTIVE SAMMELN VON FESTEN STÄDTISCHEN ABFÄLLEN UND VERSCHIEDENE AUSFÜHRUNGEN FÜR JEDE ABFALLART, MIT EINEM CONTAINER ZUR ZERKLEINERUNG VON HAUSHALTSMÜLL
GRINDING CONTAINER FOR THE SELECTIVE COLLECTION OF SOLID URBAN WASTE AND VARIOUS SPECIAL ADAPTATIONS FOR EACH TYPE OF WASTE, INCLUDING A DOMESTIC GRINDING CONTAINER

(30) Priorité: 27.04.2007 ES 200701259
(43) Date de publication de la demande: 13.01.2010
(73) Titulaire: Pérez Santafé, Jesús, 50009 Zaragoza (ES)
(72) Inventeur: Pérez Santafé, Jesús, 50009 Zaragoza (ES)
(86) Numéro de dépôt international: PCT/ES2007/070171
(87) Numéro de publication internationale: WO 2008/132253

(56) Documents cités:
- EP-A1- 0 600 808
- WO-A1-2004/045991
- ES-A1- 2 048 030
- ES-T3- 2 075 492
- ES-U- 1 040 165
- GB-A- 2 407 282
- US-A- 4 374 573
- US-A- 5 440 978
- US-B1- 6 390 321

## Description

### Secteur de la Technique à laquelle appartient l'invention:

Cette invention appartient au secteur de la technique de la trituration ( "B02C" selon la classification internationale des brevets -8^{ème} édition 2006.01-) et essaie de contribuer aux systèmes actuels de recyclage des déchets, grâce à l'incorporation d'un système mécanique de trituration dans les actuels conteneurs publics d'ordures qui permet de réduire le volume des différents types de déchets solides provenant de la consommation humaine dans son activité journalière, essayant ainsi d'éviter la transformation de davantage de ressources naturelles et pallier la consommation irresponsable et abusive de matières premières de moins en moins abondantes, dont le système est basé sur un mécanisme manuel simple consistant en un système de roues dentées par le biais duquel le simple mouvement de déplacement du couvercle coulissant d'ouverture supérieure du conteneur, est transformé en un mouvement rotatoire d'axes de lames circulaires à travers lequel on obtient la réduction du volume de différents types de déchets - boîtes de conserve, emballages, papier, matière organique, verre (récipients vitreux), déchets non recyclables ou de rejet, -en fonction d'un système varié de lames circulaires adaptées à chaque type de déchets (-qui dans le cas du verre sont remplacées par un système de disques à petits marteaux-), la simple volonté de le faire suffisant à le mettre en mouvement, aidé d'une pédale sur laquelle il s'agit de faire retomber le poids de notre corps pour donner plus de force de rotation à ces lames circulaires trituratrices réductrices (-pédale qui s'avère indispensable dans le cas des récipients en métal en raison de leur plus grande dureté-).

La présente invention dans sa version manuelle, à la différence de sa variante motorisée, résulte totalement écologique dans son utilisation puisque, son usage mécanique étant totalement manuel, elle ne consomme aucun type d'énergie et a pour but de collaborer avec les différents Pouvoirs Publics européens (Administrations de l'État, Adm. Régionales et Adms. Locales) pour l'application de la Directive 2004/12/CE, qui impose aux États membres de l'Union Européenne l'obligation d'adopter des mesures pour atteindre -dans la 2^{ème} phase de sa transposition- les objectifs suivants:
« d) au plus tard le 31 décembre 2008, entre 55% au minimum et 80% au maximum en poids des déchets d'emballages seront recyclés.
e) au plus tard le 31 décembre 2008, les objectifs minimaux de recyclage suivants pour les matériaux contenus dans les déchets d'emballages devront être atteints :
   i) 60% en poids pour le verre.
   ii) 60% en poids pour le papier et le carton.
   iii) 50% en poids pour les métaux.
   iv) 22,5% en poids pour les plastiques, en comptant exclusivement les matériaux qui sont recyclés sous forme de plastiques.
   v) 15% en poids pour le bois. »

### État de la Technique:

L'évidence la plus représentative de l'état de la technique ainsi que la plus pertinente est le brevet GB 2407282, bien que l'invention revendiquée par la présente sollicitude de brevet diffère du brevet GB 2407282 dans la mesure où le système de roues dentées qu'introduit la présente sollicitude est actionné par le déplacement manuel du couvercle coulissant situé dans la partie supérieure du conteneur, dont la prévision n'est pas recueillie dans le brevet GB 2407282, raison pour laquelle l'objet revendiqué par la présente invention est nouveau, et le problème que celle-ci se propose de résoudre peut, par conséquent, être considéré comme une proposition de solution alternative de mise en mouvement de ses roues dentées, ce qui implique une activité inventive, selon le article 33(3) du PCT, puisque ceci n'est pas compris dans l'état de la Technique, ni est déductible de la même, de façon évidente, au moins jusqu'à la date de priorité.

### Explication de l'invention:

Face à ce qui est exposé dans l'antérieur brevet et, de façon plus générale, face au système actuel de ramassage sélectif de déchets solides urbains répandu en Europe, basé sur l'implantation sur la voie publique de conteneurs de déchets similaires uniquement différenciables par leur couleur ou leur forme, le présent système constitue une innovation totale parce qu'il introduit un système réducteur du volume de ces déchets permettant de réduire de cinq à dix fois le volume des actuels systèmes de ramassage de déchets, parce que ce conteneur incorpore un système de lames circulaires actionné par une série de roues dentées qui sont à leur tour mises en mouvement par des tambours dentés actionnés par le déplacement manuel du couvercle coulissant situé sur la partie supérieure du conteneur, garantissant leur trituration grâce à un système de lames circulaires coupantes, -et de petits marteaux pour le verre-, dont le système pourra s'implanter dans la rue, une fois que les administrations publiques exigeront aux services de ramassage d'ordures que leur ramassage sélectif soit de type "monomatériel" (d'un unique matériel) grâce à l'implantation d'un type de conteneur spécialisé pour chaque type de déchets, de façon à ce que l'existence des types de conteneurs suivants puisse être exigée:
- un conteneur spécifique pour les récipients en plastique de type PEHD, PEBD, PS, PP et PET (-par exemple jaune)
- un autre type de conteneur pour le ramassage des boîtes de conserve en métal (par exemple de couleur grise)
- un autre type pour le ramassage de tétrabricks (par exemple de couleur argentée)
- un autre type de conteneur pour le papier et le carton (-par exemple: bleu-);
- un autre pour le ramassage du verre (par exemple: vert clair );
- un autre pour le ramassage de matière organique (-p.e. marron-),
- et un autre pour le ramassage des déchets non recyclables ou de rejet (-p.e.couleur vert foncé)
Cette variété pourra s'agrandir postérieurement à d'autres conteneurs spécialisés qui peuvent s'implanter dans des espaces municipaux d'usage public, pour un ramassage sélectif encore plus spécialisé comme peut l'être le ramassage de: piles, électroménager, mobilier en bois ou autres résidus volumineux, et même de textiles ou autres déchets ménagers potentiellement polluants pour l'environnement tels que les huiles usées ou les produits chimiques non biodégradables comme les produits d'entretien, détergents, vernis, peintures, médicaments, etc.

### Brève description du contenu des dessins:

- Figure 1.1: Vue frontale du conteneur fermé.
- Figure 1.2: Vue latérale du conteneur fermé.
- Figure 2.1: Vue latérale externe du conteneur.
- Figure 2.2: Vue latérale interne du conteneur depuis sa paroi de droite.
- Figure 2.3: Vue interne du côté droit du conteneur avec le couvercle ouvert, incorporant la position du châssis.

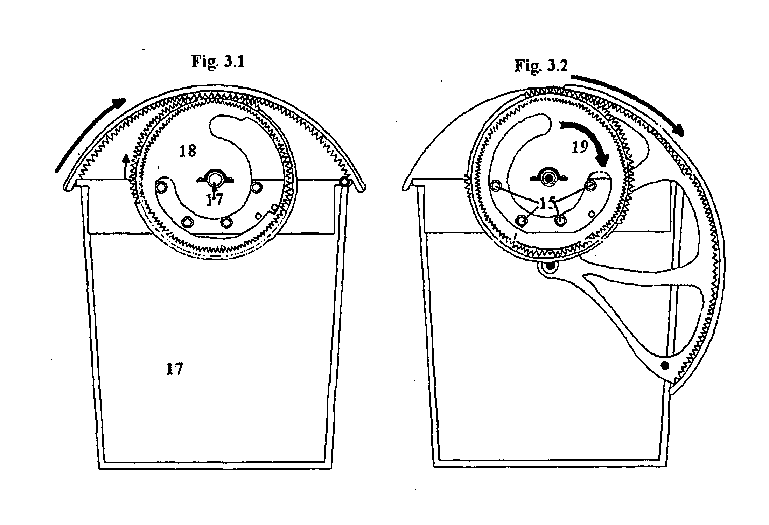

- Figure 3.1: Base commune des tambours latéraux avec l'indication des zones-guides de passage en traversant les quatre axes de lames circulaires avant l'ouverture du couvercle coulissant.
- Figure 3.2: Base commune des tambours latéraux avec l'indication des zones-guides de passage en traversant les quatre axes de lames circulaires après l'ouverture du couvercle coulissant.
- Figure 4.1: Tambour latéral gauche vu depuis sa face intérieure avec le couvercle coulissant supérieur fermé, avant son déplacement.
- Figure 4.2:Tambour latéral gauche vu depuis sa face intérieure, une fois le couvercle coulissant supérieur déplacé jusqu'à sa limite.
- Figure 5.1: Tambour latéral droit vu depuis sa face extérieure avec le couvercle coulissant supérieur fermé avant son déplacement, avec l'indication de la position des chaînes d'axes.
- Figure 5.2: Tambour latéral droit vu depuis sa face extérieure, une fois le couvercle coulissant supérieur déplacé jusqu'à sa limite.
- Figure 6: Châssis de support des tambours et des axes de lames circulaires.
- Figure 7.1: Vue latérale intérieure du conteneur présentant la base commune des deux tambours et la position des axes de lames circulaires.
- Figure 7.2: Vue frontale de l'intérieur du conteneur reflétant le profil latéral des tambours et les positions transversales des axes de lames circulaires.
- Figure 7.3: Vue latérale du châssis montrant la position des axes supérieurs E-1 et E-3 et des axes inférieurs E-2 et E-4, de leurs roulements de cliquet et des roues mineures R5 et R6.
- Figure 8.1: Vue supérieure du châssis avec l'indication de la position de logement des quatre axes de lames circulaires et des deux tambours moteurs sur les côtés du châssis.
- Figure 8.2: Rotation à 90° de la position verticale du conteneur indiquée dans la figure 8.4.
- Figure 8.3: Vue supérieure frontale -transversale du conteneur avec indication de la position d'ancrage du châssis dans le récipient, et des axes des tambours sur les côtés du châssis.
- Figure 8.4: Rotation à 90° latérale de la position du conteneur indiquée dans la figure 8.3.
- Figure 9.1: Lame circulaire en position normale.
- Figure 9.2: Lames ou lames circulaires en position forcée.
- Figure 9.3.1: Couvercle de la boîte du ressort.
- Figure 9.3.2: Position d'entrée des lames circulaires dans l'axe par le creux du levier de traînage.
- Figure 9.4.1: Boîte du ressort dans la position normale de fonctionnement sans son couvercle.
- Figure 9.4.2: Boîte du ressort de la lame circulaire après sa fermeture.
- Figure 10.1: Lame circulaire en position normale ( verticale ).
- Figure 10.2: Lame circulaire en position oblique - gauche dans sa partie supérieure.
- Figure 10.3: Lame circulaire en position oblique - droite dans sa partie supérieure.
- Figure 10.4: Lame circulaire en position normale et avec prévision de ses limites de rotation.
- Figure 10.5: Lame circulaire en position verticale incorporant son ressort dans sa position normale.
- Figure 10.6: Lame circulaire en position oblique -gauche incorporant ses ressorts supportant sa pression gauche.
- Figure 10.7: Lame circulaire en position oblique - droite incorporant ses ressorts supportant sa pression droite.

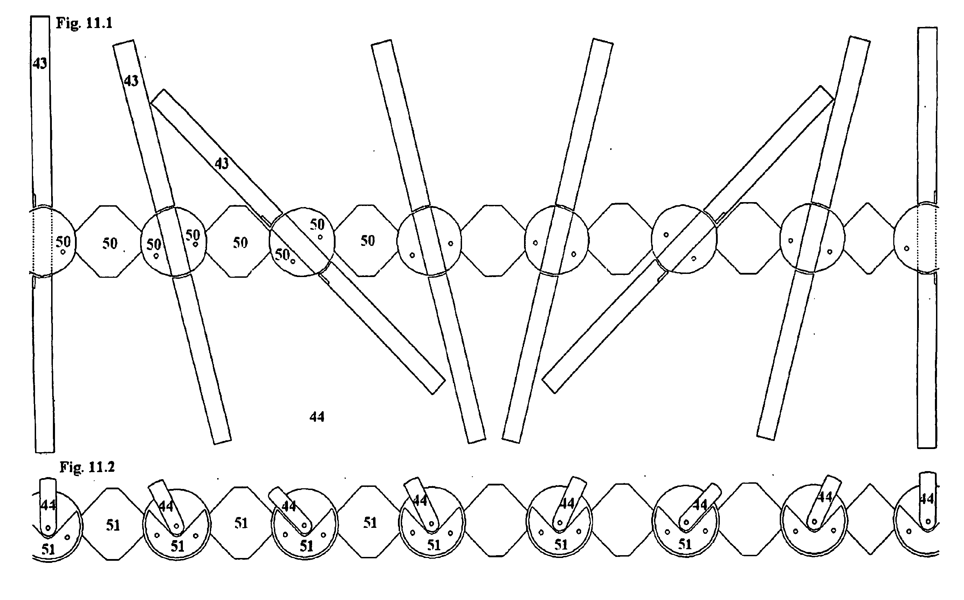

- Figure 11.1: Mobilité oblique-latérale de la lame circulaire dans le développement de ses différentes positions face aux différentes pressions latérales.
- Figure 11.2: Différentes positions du levier interne de poussée de la lame circulaire face aux différentes positions des lames circulaires face aux différentes pressions latérales.
- Figure 12.1: Levier en position centrée.
- Figure 12.2: Levier en position gauche ( oblique-gauche ).
- Figure 12.3: Levier en position droite ( oblique-droite ).
- Figure 13.1: Vue latérale du conteneur avec l'indication de la position des lames circulaires.
- Figure 13.2: Vue axiale des axes de lames circulaires, vus depuis les tambours latéraux.
- Figure 13.3: Détail de la distribution des axes de lames circulaires sur le côté du châssis.
- Figure 13.4: Vue latérale des lames circulaires pour boîtes de conserve ou autres récipients en métal (-lames circulaires supérieures à six dents ou griffes et lames circulaires inférieures à 4 dents ou griffes placées dans leurs lobes-).
- Figure 14: Variante de lames circulaires pour les récipients en plastique.
- Figure 15: Variante de lames circulaires pour les récipients en tétrabricks.
- Figure 16: Variante de lames circulaires pour le papier et le carton.
- Figure 17: Variante de lames circulaires pour la matière organique.
- Figure 18: Variante de lame circulaire à petits marteaux, pour le verre et autres matériaux vitreux.
- Figure 19: Variante de lames circulaires pour les déchets non recyclables ou de rejet (inutilisables).

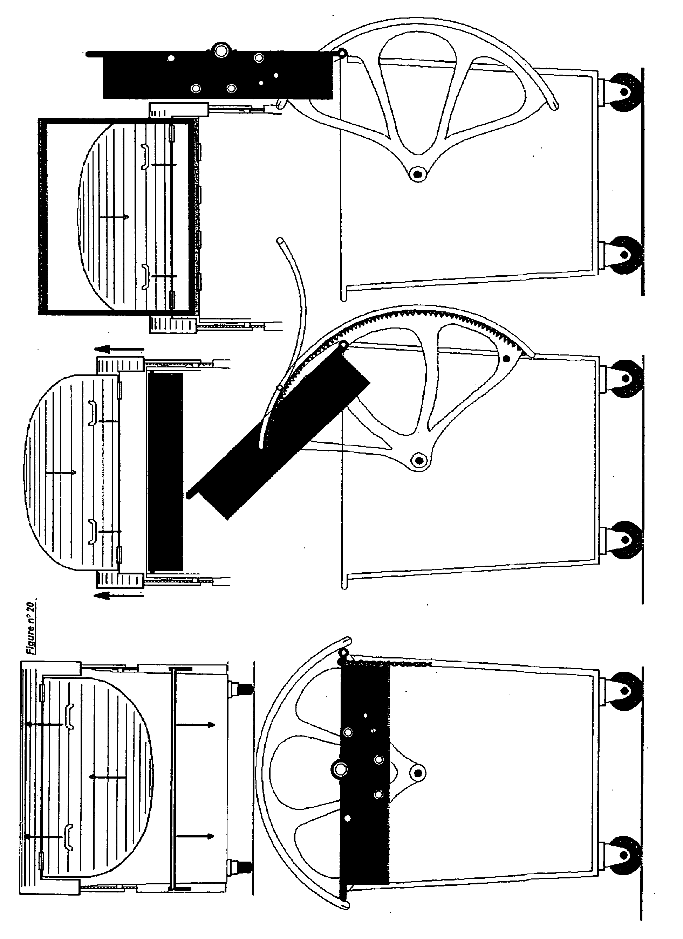

- Figure 20: Processus d'ouverture du châssis (trois phases) pour permettre la sortie des déchets en dehors du conteneur.
- Figure 21.1: Position des dispositifs de tolérance ou "tolérants".
- Figure 21.2: Position des "tolérants". vus depuis le dessus.
- Figure 21.3: Position des "tolérants" vus en position verticale ( debout ) et latérale.
- Figure 21.4: Vue des "tolérants" en position verticale frontale.
- Figure 21.5: Grossissement du détail d'un "tolérant" ( ressort de tolérance).
- Figure 21.6: Position stable des axes E-3 et E-4.
- Figure 21.7: Position forcée de déplacement de l'axe.
- Figure 22.1: Vue latérale du conteneur domestique dans sa version manuelle, vu depuis son extérieur
- Figure 22.2: Vue latérale du conteneur domestique dans sa version manuelle, vu depuis son intérieur.
- Figure 22.3: Vue supérieure du conteneur domestique dans sa version manuelle.
- Figure 22.4: Vue frontale du conteneur domestique dans sa version manuelle.

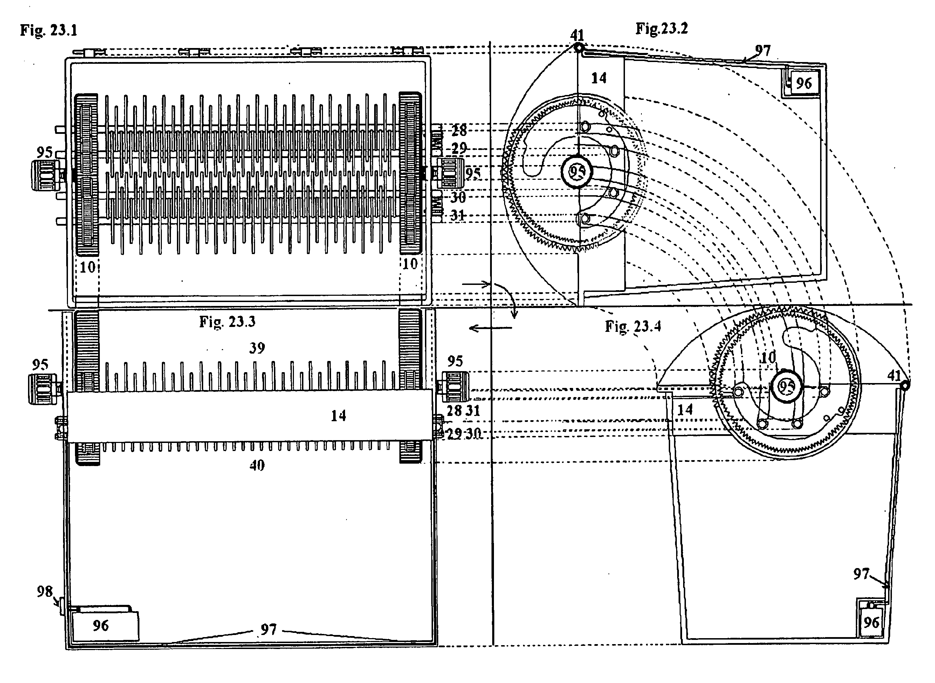

- Figure 23.1: Vue supérieure du châssis avec l'indication de la position du logement des 4 axes de lames circulaires et leurs deux tambours moteurs actionnés par les moteurs latéraux.
- Figure 23.2: Rotation à 90 degrés de la position verticale du conteneur indiquée dans la figure 23.4
- Figure 23.3: Vue du conteneur dans sa position verticale frontale -transversale avec la position d'ancrage du châssis.
- Figure 23.4: Rotation à 90° latérale de la position du conteneur indiquée dans la figure 23.3.

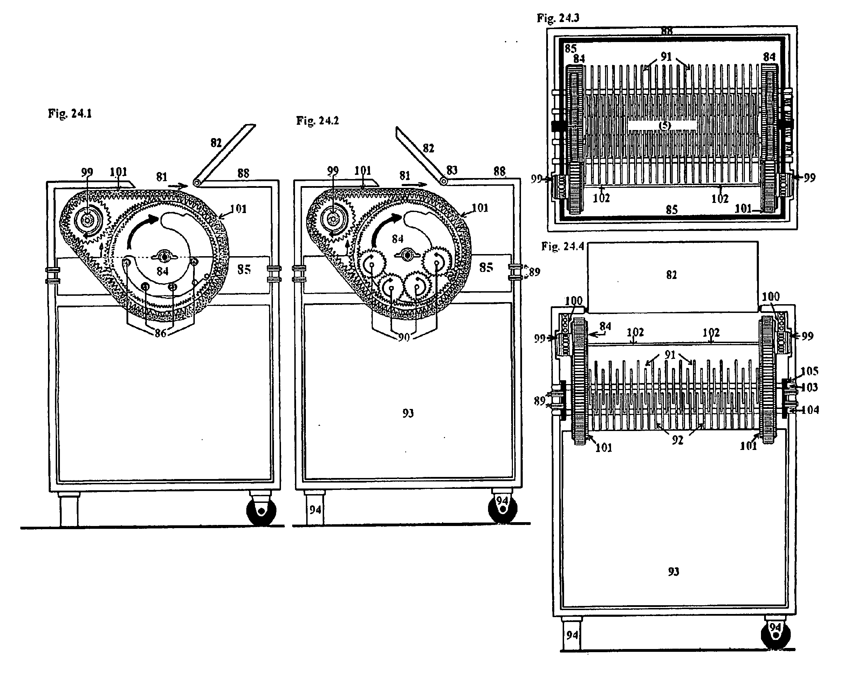

- Figure 24.1: Vue latérale du conteneur-triturateur domestique dans sa version motorisée, vu depuis son extérieur.
- Figure 24.2: Vue latérale du conteneur-triturateur domestique dans sa version motorisée, vu depuis son intérieur.
- Figure 24.3: Vue supérieure du conteneur-triturateur domestique dans sa version motorisée.
- Figure 24.4: Vue frontale du conteneur-triturateur domestique dans sa version motorisée.
- Figure 25: Vue frontale du conteneur-triturateur domestique dans sa version mixte manuelle-motorisée.

### Numérotation des éléments techniques de l'invention:

( 1) Couvercle coulissant supérieur courbé.
( 2) Visière rabattable de protection.
( 3) Récipient du conteneur.
( 4) Barre - pédale d'ouverture auxiliaire.
( 5) Poignées de traînage.
( 6) Axe du couvercle coulissant supporté par le récipient.
( 7) Chaîne de traînage pour l'ouverture du couvercle.
( 8) Boîte de roues dentées d'appui pour l'ouverture manuelle du couvercle.
( 9) Bandes dentées de roulement situées dans la partie inférieure du couvercle coulissant.
(10) Tambours latéraux.
(11) Chaînes de motricité des roues dentées qui font tourner les axes de lames circulaires
(12) Levier latéral de la barre-pédale d'ouverture.
(13) Patin denté.
(14) Châssis de support des tambours latéraux et des quatre axes de lames circulaires.
(15) Roulement de cliquet pour permettre la rotation des axes E-1 , E-2 , E-3 et E-4 dans une direction unique.
(16) Fin de la course du couvercle supérieur, de la pédale et du patin.
(17) Axe de chaque tambour latéral.
(18) Disposition du tambour sur le châssis à travers son axe en montrant la position des zones-guides de passage des quatre axes qui traversent le tambour en position de "début de course".
(19) Placement du tambour sur le châssis en montrant la position des zones - guide de passage des 4 axes qui traversent le tambour, quand le tambour arrive à la fin de sa course.
(20) Roue dentée R-1 qui actionne la rotation de l'axe supérieur E-1.
(21) Roue dentée R-2 qui actionne la rotation de l'axe inférieur E-2.
(22) Roue dentée R-3 qui actionne la rotation de l'axe supérieur E-3.
(23) Roue dentée R-4 qui actionne la rotation de l'axe inférieur E-4.
(24) Roue dentée mineure R- 5 qui actionne la rotation de la roue dentée de l'axe supérieur E-3.
(25) Roue dentée mineure R-6 prévue pour tendre la chaîne qui lie les axes supérieur E-3 et inférieur E-4 dans le cas où l'axe E-4 se déboîterait de sa position ordinaire dans sa tolérance au passage de volumes anormaux entre les axes inférieurs.
( 26) Profil des tambours, vus de dessus.
( 27) Face intérieure du tambour latéral gauche qui indique la situation des roues dentées sans les chaînes.
( 28) Axe supérieur de lames circulaires E-3.
( 29) Axe inférieur de lames circulaires E-4.
( 30) Axe inférieur de lames circulaires E-2.
( 31) Axe supérieur de lames circulaires E-1.
( 32) Face intérieure du tambour latéral droit, qui indique la situation des roues dentées avec les chaînes.
( 33) Profil latéral des tambours, vus dans leur position verticale.
( 34) Vue transversale des lames circulaires.
( 35) Vue transversale des axes de lames circulaires.
( 36) Tambour gauche.
( 37) Tambour droit.
( 38) Roulements de cliquet de l'axe d'ouverture du couvercle supérieur.
( 39) Lames circulaires des axes supérieurs.
( 40) Lames circulaires des axes inférieurs.
( 41) Charnière du châssis sur le bord supérieur du côté postérieur du récipient du conteneur.
( 42) Fond du tambour.
( 43) Lame circulaire commune.
( 44) Levier de traînage de l'axe de lames circulaires.
( 45) Ressort circulaire logé à l'intérieur de la lame circulaire autour du creux de passage de l'axe.
( 46) Couvercle de la boîte du ressort de chaque lame circulaire.
( 47) Caisse de logement du ressort circulaire à loger à l'intérieur de la lame circulaire.
( 48) Creux prévu dans la lame circulaire pour l'entrée de l'axe et son levier au travers de la lame circulaire.
(49) Ressorts stabilisateurs situés entre les lames circulaires pour obtenir l'effet de retour des lames circulaires à leur position parallèle initiale après que ceux-ci ont subi les pressions obliques-latérales.
( 50) Axe commun de lames circulaires avec prévision de la situation des lames circulaires.
(51) Axe commun de lames circulaires avec indication des leviers internes de poussée de chaque lame circulaire.
(52) Lame circulaire supérieure d'approximation pour récipients métalliques (conserves, emballages, etc.)
( 53) Lame circulaire inférieure pour le broyage d'emballages ou récipients métalliques.
( 54) Lame circulaire supérieure d'approximation pour les récipients en plastique.
( 55) Lame circulaire inférieure pour le broyage de récipients en plastique.
( 56) Lame circulaire supérieure d'approximation pour les récipients en tétrabicks.
( 57) Lame circulaire inférieure pour le broyage de récipients en tétrabricks.
( 58) Lame circulaire supérieure d'approximation pour le papier et le carton.
( 59) Lame circulaire inférieure pour le broyage du papier et du carton.
( 60) Lame circulaire supérieure d'approximation pour la matière organique.
( 61) Lame circulaire inférieure pour le broyage de la matière organique.
( 62) Roues dentées en métal des lames circulaires pour le broyage de la matière organique.
( 63) Rouleaux en gomme des lames circulaires pour le broyage de la matière organique.
( 64) Lame circulaire de petits marteaux pour le broyage du verre.
( 65) Petits marteaux de broyage du verre.
( 66) Disque de phases de chute des petits marteaux de broyage du verre.
( 67) Composition de disques de broyage du verre "en série", et sa présentation contiguë à Une autre composition opposée ou en forme de "reflet", ou "miroir".
(68) Lame circulaire supérieure d'approximation pour les déchets non recyclables ou de rejet (inutilisables).
( 69) Lame circulaire inférieure double pour le broyage des déchets de rejet.
( 70) Lame de la lame circulaire double pour le broyage des déchets de rejet.
( 71) Lame motrice excentrique de la lame circulaire double pour le broyage de déchets de rejet pour donner un effet de coupure sinueuse.
( 72) Dispositifs de tolérance ou "tolérants"
( 73) Position stable des axes E-3 et E- 4 dans le châssis.
( 74) Position forcée des axes E-3 et E- 4 dans le châssis.
( 75) Boîte de logement des axes et des ressorts ou dispositifs de tolérance ("tolérants").
( 76) Ressorts de tolérance et de stabilisation de l'axe du "tolérant".
( 77) Largeur de tolérance.
( 78) Roue de fond.
( 79) Barre du levier du conteneur-triturateur domestique.
( 80) Début de course du levier du conteneur-triturateur domestique.
( 81) Fenêtre supérieure d'entrée du conteneur-triturateur domestique.
( 82) Couvercle supérieur d'entrée du conteneur-triturateur domestique.
( 83) Charnière du couvercle d'entrée.
( 84) Tambours latéraux du conteneur-triturateur domestique.
( 85) Châssis du conteneur-triturateur domestique.
( 86) Roulements de cliquet pour le logement des axes de lames circulaires du conteneur-triturateur-domestique.
( 87) Fin de course du levier du conteneur-triturateur domestique.
( 88) Couverture de l'armoire du conteneur-triturateur domestique.
( 89) Vis de fixation du châssis au conteneur-triturateur domestique.
(90) Roues dentées chargées de remuer les axes de lames circulaires logés dans leurs roulements de cliquet.
( 91) Lames circulaires des axes supérieurs.
( 92) Lames circulaires des axes inférieurs.
( 93) Caisse de déchets déjà triturés.
( 94) Pied / roue.
( 95) Moteur électrique du conteneur-triturateur.
( 96) Batterie
( 97) Câblage depuis la batterie jusqu'aux moteurs.
( 98) Prise de courant externe pour l'alimentation électrique alternative.
( 99) Moteur électrique du conteneur triturateur domestique.
(100) Anneau de fixation du moteur.
( 101) Chaîne de transmission.
( 102) Axe moteur.
( 103) Axes supérieurs de lames circulaires.
( 104) Axes inférieurs de lames circulaires.

### Exposition détaillée de la manière de réalisation de l'invention:

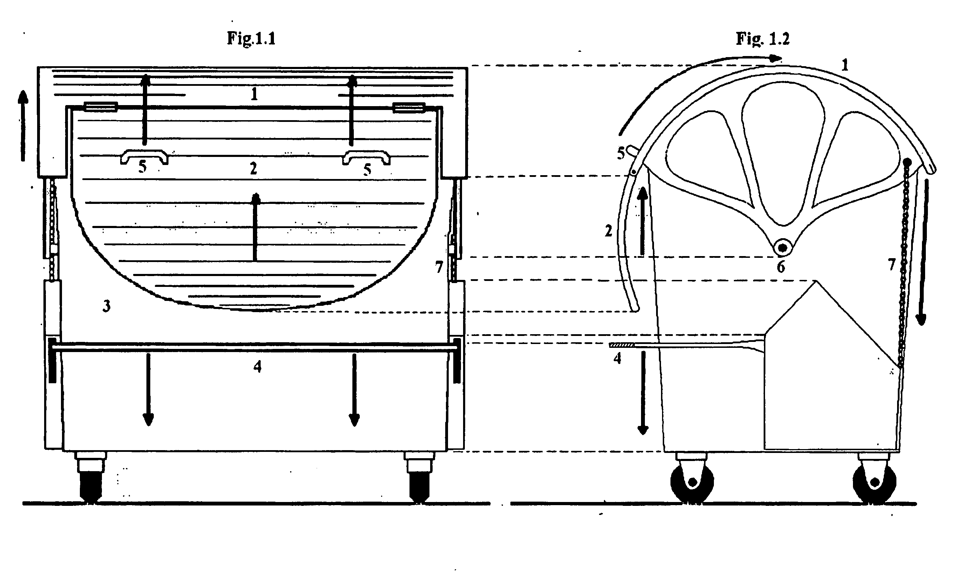

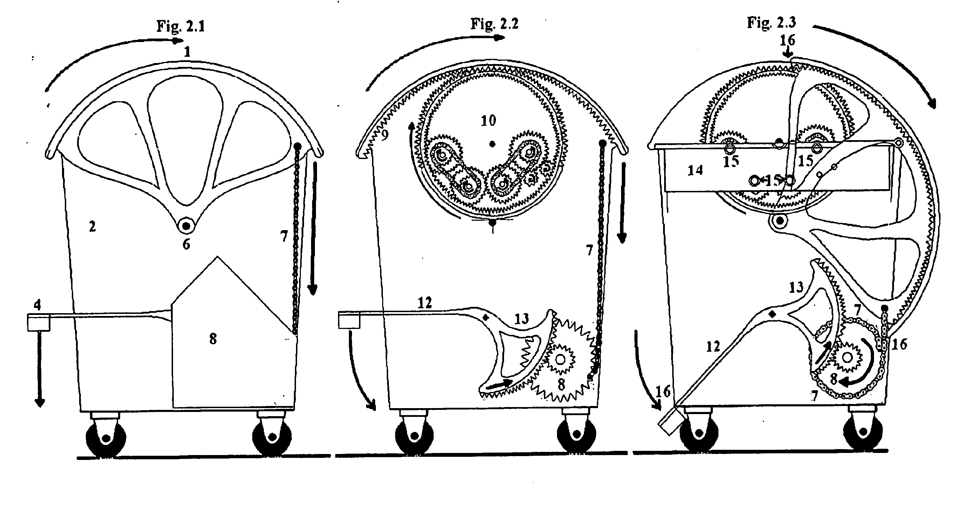

En entrant dans l'explication de l'invention, la première phase de ce système de broyage mécanique se base sur la transformation du mouvement mécanique produit par le déplacement horizontal du couvercle coulissant courbé (1) -situé dans la partie supérieure du conteneur-, vers sa zone postérieure, transformant ce mouvement d'ouverture (16) en un mouvement circulaire des deux tambours (10) de roues dentées situées sur les parois latérales du conteneur (-dans les parties supérieures des deux côtés, gauche et droit-) grâce à un système de dents symétriques qui, agissant à la manière d'une "fermeture éclair" en cours d'exécution, provoque la rotation de chaque tambour comme un sourcil ( couvercle courbé ) qui tourne sur son oeil ( ou tambour ) puisque, chaque tambour se trouvant situé dans la partie supérieure des côtés gauche et droit du conteneur, le déplacement du couvercle coulissant sur son propre axe de rotation (6), fait que ses propres bandes dentées (9) -situées sur la face inférieure des côtés gauche et droit du couvercle- déplacent les dents de la zone externe ou "bande de roulement" (9) de chaque tambour latéral -qui se trouvent supportés sur un châssis indépendant (14)- en provoquant ainsi le mouvement circulaire des tambours latéraux tout comme le montrent les figures n° 2.1, f. 2.2 et f. 2.3- De la même manière, et afin d'obtenir l'ouverture de son couvercle coulissant avec les mains (5), est prévue la disposition d'une barre horizontale (4) dans la partie inférieure de la face frontale du conteneur ( comme le montre la figure 1) qui, pour donner plus de force à l'ouverture du couvercle supérieur, transmet le mouvement de déplacement descendant de la barre horizontale citée, en un mouvement angulaire descendant de chacun de ses leviers latéraux ( 12) situés sur les deux côtés gauche et droit de conteneur, de telle sorte que le mouvement de ses patins dentés ( 13) situés au bout de chaque levier, produise la rotation des roues dentées mineures encastrées de façon concentrique sur les autres roues dentées majeures situées dans la partie inférieure (8) de chaque côté du conteneur, cette rotation provoquant l'enroulement des chaînes qui contournent chacune des roues dentées majeures situées sur chaque côté, et qui sont directement liées aux coins postérieurs des côtés gauche et droit du couvercle coulissant supérieur cité, comme l'expliquent les figures 2.2 et 2.3, afin de faciliter l'ouverture coulissée du couvercle coulissant par la fonction de traction descendante que réalise la chaîne en s'enroulant sur les roues dentées situées au pied du conteneur.

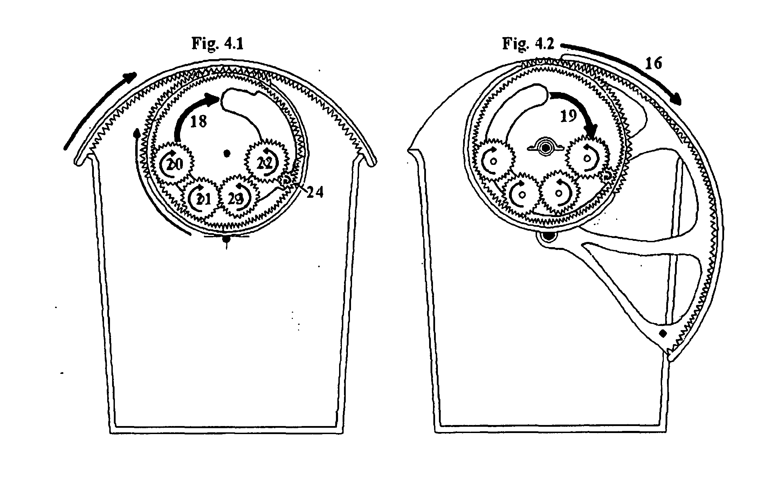

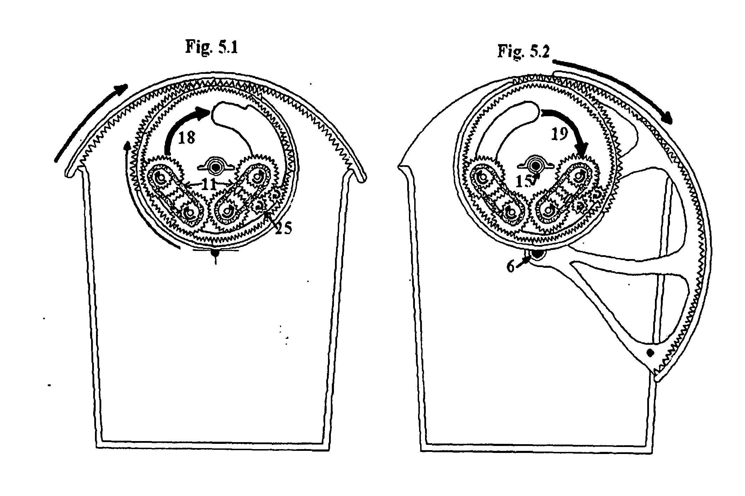

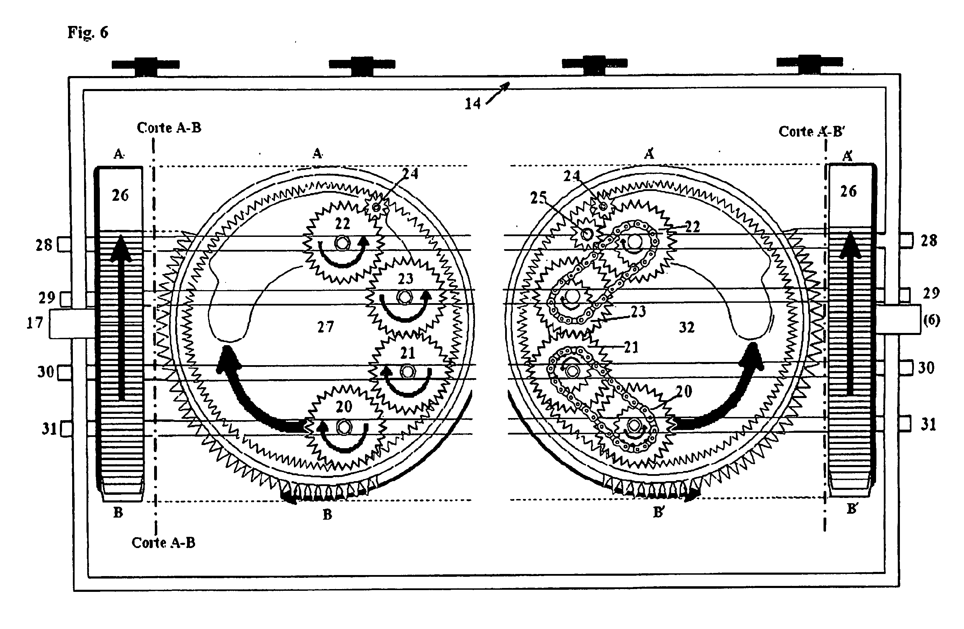

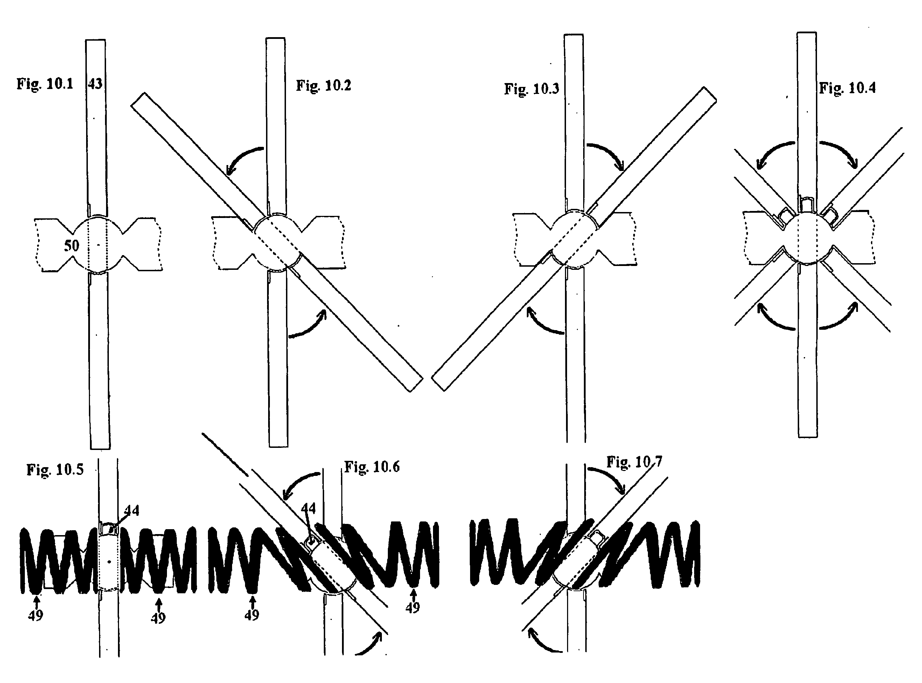

Postérieurement, dans une deuxième phase mécanique -bien que synchronique dans le temps-, le mouvement causé par le couvercle coulissant supérieur sur chacun des deux tambours situés dans la partie supérieure des parois latérales gauche et droite du conteneur, - qui produit un mouvement circulaire de rotation à chacun des deux tambours latéraux de façon synchronique sur leurs axes respectifs ( comme le montrent les f. 3.1 et f. 3.2 )-, ce mouvement des tambours fait tourner les roues dentées (-20, 21, 22 , 23, 24 et 25-) situées à l'intérieur de chaque tambour, -comme le montrent plus explicitement les figures 4.1 et 4.2 par rapport au tambour gauche, et les figures 5.1 et 5.2 par rapport au tambour droit-, ces tambours se trouvant soutenus par leurs axes respectifs, lesquels se trouvent à leur tour encastrés dans un châssis rectangulaire grâce à chacun des roulements de cliquet (38), tout comme l'indique la figure 6-.

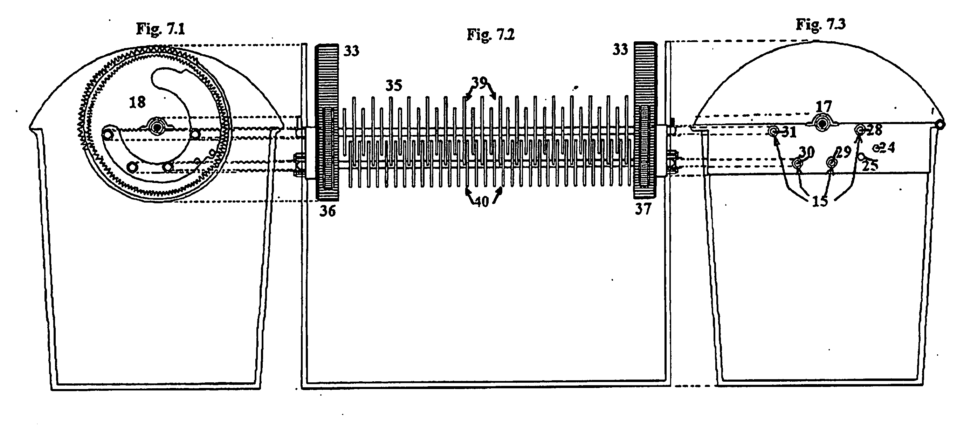

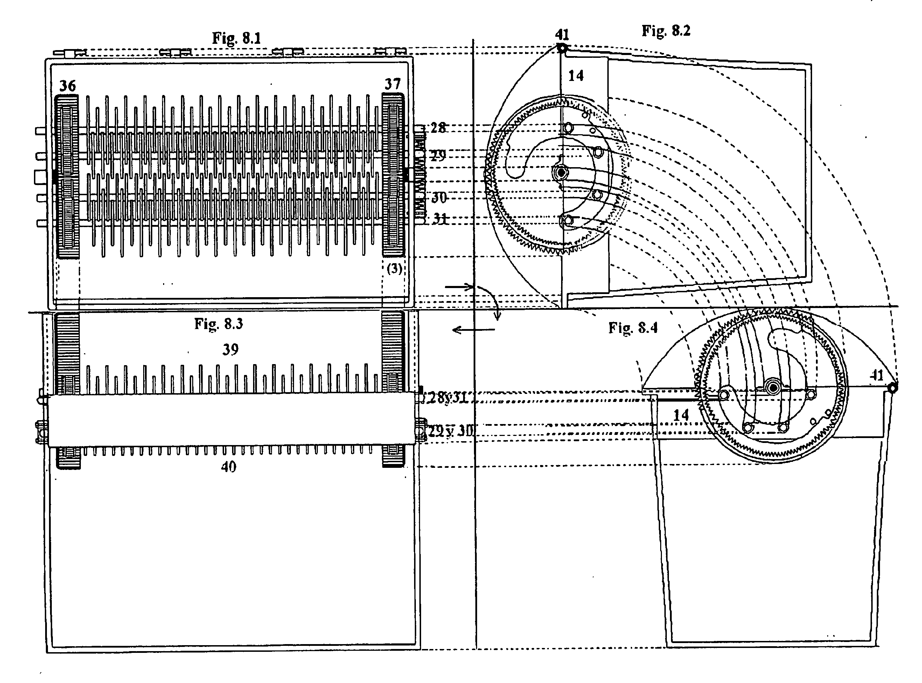

Par ailleurs, ce châssis (14) - qui se trouve situé dans la bande supérieure de l'intérieur du conteneur à la manière d'une ceinture interne-, sera fait d'un matériel suffisamment robuste pour pouvoir supporter les torsions prévisibles que vont lui engendrer les axes de lames circulaires (-28, 29, 30 et 31-) qu'il supporte, (- qui, dans l'exemple montré dans la figure 2 et les suivantes, est configuré avec quatre axes de lames circulaires, bien que ces axes puissent être d'un chiffre supérieur ou inférieur en fonction des besoins-), châssis sur lequel ses axes (- actionnés par leurs roues dentées respectives mineures situées aux extrémités de chaque axe-), vont être mis en marche par l'action de rotation des tambours latéraux mentionnés, ( comme l'explique la figure 6 ), grâce au fait que ces petites roues dentées des axes de lames circulaires se trouvent situées à l'intérieur des tambours latéraux, devant prendre en compte que ces axes se trouvent supportés par les côtés gauche et droit du châssis grâce à leurs propres roulements à fonction de cliquet (15) également situés aux extrémités gauche et droite de chaque axe (comme on peut l'apprécier dans les figures 7 et 8), ce châssis se configurant comme une structure indépendante par rapport au récipient (3) sur lequel il s'appuie, et dont l'assujettissement à la paroi du fond est garantie à travers plusieurs charnières (41) situées dans la partie supérieure de la paroi postérieure du conteneur (figure 6, figure 7.3, f. 8 et 20) afin que ce châssis résulte totalement rabattable sur le récipient et que l'on puisse ainsi vider les déchets lui ayant été introduits ( emballages, boîtes de conserve, etc ), une fois ces déchets triturés par l'action des lames circulaires (39, 40) disposées perpendiculairement sur les axes transversaux qui, mis en mouvement synchroniquement par les deux tambours, se trouvent de la même manière encastrés dans le châssis grâce aux roulements à fonction de cliquet ( figure 8.1, 8.2, 8.3 et 8.4 ) tout comme se trouvent encastrés dans ce châssis rabattable les deux tambours latéraux par le biais de leurs roulements "fous" (ou sans contrôle) respectifs.

Et cela parce que, dans cette troisième phase mécanique - bien que, comme les deux premières, synchronique dans le temps-, le mouvement de rotation simultané des deux tambours latéraux, provoqué par le couvercle, va produire les rotations suivantes induites et synchroniques de chaque groupe de quatre petites roues dentées en contact les unes avec les autres (-du fait d'être situées à l'intérieur de chacun des deux tambours latéraux-) de telle sorte que:
- d'un côté, grâce au fait que les quatre roues dentées internes situées dans le tambour gauche supportent les extrémités gauches respectives de chacun des quatre axes de lames circulaires, et
- de l'autre, grâce au fait que chacune des quatre roues dentées internes situées dans le tambour droit, supportent les extrêmités droites respectives des mêmes axes de lames circulaires, cette disposition de roues dentées, situées à l'intérieur de chaque tambour, va faire que la rotation simultanée de chaque tambour, -provoquée à son tour par l'action coulissante du couvercle-, provoque la rotation synchronique de chacune des roues dentées mineures situées à l'intérieur de chacun des tambours, en causant ainsi la rotation de chacun des axes de lames circulaires, (-dont les roues intérieures de chaque tambour, R-1, R-2, R-3 et R-4 ont été dessinées avec 30 dents à titre d'exemple) produisant une rotation à 360 degrés à chacun des quatre axes de lames circulaires mentionnés, bien que ces axes se trouvent appuyés réellement sur le châssis, ce châssis constituant par conséquent le support réel tant pour les quatre axes de lames circulaires que pour les deux tambours latéraux, étant donné que tous se trouvent encastrés dans le châssis mentionné de façon transversale grâce à leurs roulements respectifs (-voir figures 6, 7 et 8-) puisque ces tambours ne supportent pas les axes, mais ne font que les mettre en mouvement.

Dans cette même phase mécanique, il est important de dire que la curieuse disposition des quatre petites roues dentées logées dans la partie intérieure de chaque tambour latéral ( comme l'indique la figure 6 ) fait que, d'un côté, les roues dentées R-1 et R-2 - toutes deux de même mesure radiale ( dessinées à titre d'exemple avec 30 dents de même pas denté que la bande dentée de roulement interne du tambour mentionné, dont le tambour interne est dessiné avec 120 dents internes à titre d'exemple )- tournent synchroniquement et de la même façon lors du déplacement du couvercle coulissant du conteneur vers la paroi postérieure du conteneur, ce déplacement faisant que les deux tambours latéraux tournent en même temps sur leurs axes respectifs dans le châssis, dans les sens suivants:
- Son tambour droit, dans le sens des aiguilles d'une montre (celui-ci vu de la même manière depuis l'extérieur du conteneur), cela produisant en même temps le mouvement synchronique des quatre roues dentées logées à l'intérieur de chaque tambour, avec les effets suivants : en premier lieu ( voir fig. 6 ) les roues R-1 (20) et R-2 (21) du tambour gauche, vont tourner dans le sens des aiguilles d'une montre ( vu depuis l'intérieur du conteneur) en même temps que les roues dentées internes R-3 (22) et R-4 (23), (-identiques dans leur construction aux roues R-1 et R-2-) tournent dans le sens inverse des aiguilles d'une montre (vu de la même manière depuis l'intérieur du conteneur) par l'action d'effet alternateur de la rotation initiale qui produit l'interposition de la petite roue interne R-5 (24) (-dessinée dans ladite figure 6-) de telle façon que cette interposition fait changer le mouvement de rotation, dans le sens des aiguilles d'une montre, que lui produit la bande dentée de roulement située dans l'anneau interne du tambour, produisant à sa roue contiguë R-3 un mouvement contraire - c'est-à-dire, dans le sens inverse des aiguilles d'une montre, dans une fonction d'inversion identique à celle que produit à son tour la roue R-2 à la roue R-4 puisque, en étant également contiguës dans leurs dents, la roue motrice R-2 provoque à sa roue contiguë R-4 un mouvement contraire... produisant un processus inversé identique dans le tambour droit.....

C'est pourquoi, et afin d'expliquer la rotation des axes de trituration, comme quatrième effet du mouvement mécanique initial du couvercle, il doit être spécifié que, dans le cas des axes E-1 (31) et E-2 (30) leur rotation va s'effectuer: -dans le tambour gauche, dans le sens des aiguilles d'une montre si l'on regarde depuis l'intérieur du conteneur en même temps que -dans le tambour droit, les mêmes axes E-1 et E-2, vont tourner dans le sens inverse des aiguilles d'une montre si l'on regarde de la même façon depuis l'intérieur du conteneur, pendant que dans le cas des axes E-3 ( 28) et E-4 (29) il sera opposé au sens de rotation des axes E-1 et E-2, tant dans son tambour gauche que dans son tambour droit, raison pour laquelle cela va produire un mouvement à la fois synchronique et opposé aussi bien entre les deux axes supérieurs de lames circulaires (E-1 et E3) qu'entre les deux axes inférieurs ( E-2 et E-4 ), grâce au fait que les premiers ont pour fonction d'approcher les déchets déposés vers la zone centrale du conteneur pour leur broyage, les deux axes supérieurs E-1 et E-3 tournant de façon contraire entre eux, en même temps qu'ils poussent et aplatissent initialement ces déchets, pendant qu'ils les approchent vers les axes inférieurs E-2 et E-4, lesquels, à leur tour et dans l'accomplissement de leur fonction de trituration, finissent par les avaler, ces axes tournant aussi de façon opposée entre eux, et pendant qu'ils triturent les déchets que leur approchent les axes de lames circulaires supérieurs, jusqu'à ce que ces déchets finissent par tomber - une fois triturés-, au fond du récipient du conteneur.

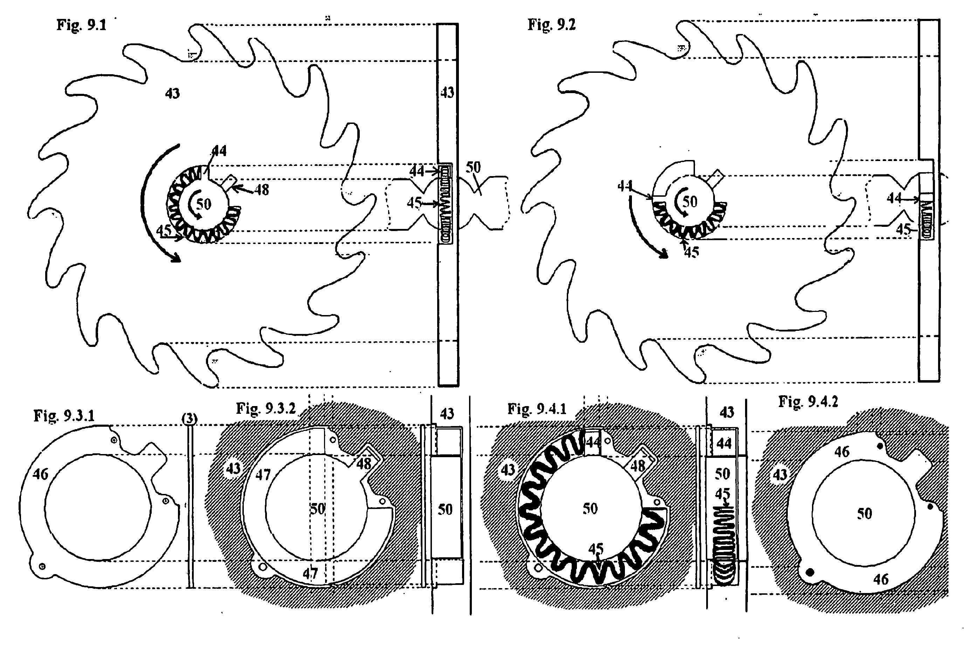

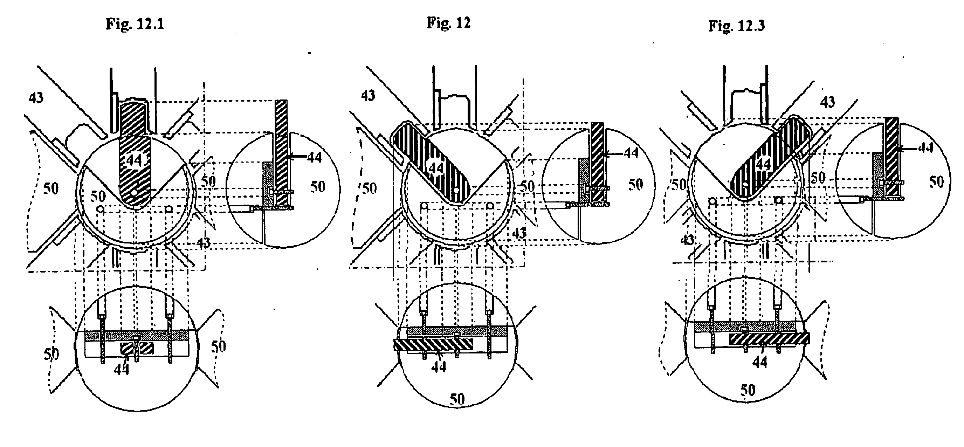

Système de broyage : Bien que le système de compression par l'écrasement des déchets par l'intersection liée ou partiellement croisée entre les lames circulaires de ses axes, soit le même pour tous les types de déchets ( à l'exception de celui des déchets vitreux qui, comme on le verra, s'effectue par un système de petits marteaux ), le format de ses lames circulaires de disque (43) va varier en fonction du type de résidus à triturer quoique, dans tous, ce nouveau système de lames circulaires est caractérisé en ce que l'assujettissement de ces lames circulaires à leur axe n'est pas fixe, -cas de quelques triturateurs électriques- mais mobile dans deux sens ou acceptions:
A)- En premier lieu, il est mobile dans son assujettissement tournant, lequel permet à la lame circulaire citée de s'arrêter ou de freiner bien que son axe continue de tourner, tant que son ressort robuste interne (45) (-logé dans la zone d'assujettissement axial de la lame circulaire citée autour de l'axe (47)-) le lui permet, permettant ainsi à la lame circulaire de gagner les tolérances de passage nécessaires que va lui exiger le broyage des matériaux impropres plus durs qu'incorporent inévitablement presque tous les déchets, et bien que le ressort cité cède son passage progressivement, cette tolérance du ressort va cependant finir dans l'arrêt maximal de recul (-rétrécissement-) du ressort (situé autour de l'axe) dont le levier interne de l'axe (44) ne va plus continuer de permettre le freinage initial de sa lame circulaire (voir figures 9.1, 9.2, 9.3 et 9.4,), cette limite mécanique de tolérance provoquant une forte impulsion coupante finale à cette lame circulaire, de grande efficacité pour le broyage des différents types de déchets, et cela sans tenir compte du fait que l'on peut également incorporer, pour chaque type de résidus, un type de ressort plus ou moins fort, en même temps que l'on peut, de la même manière, régler la course de ce ressort circulaire en fonction de la longueur de celui-ci, par exemple grâce à la régulation du ressort par son vissage dans son creux de logement circulaire.
B)- En deuxième lieu, ce système de lames circulaires (39 et 40) à tolérance dans leur rotation par leur fonction mobile indépendante de leur propre axe (50 et 51), dispose également d'un deuxième système antiblocage, que lui permet le déplacement oblique latéral de la lame circulaire sur le plan perpendiculaire de l'axe dans lequel est situé la lame circulaire, en abandonnant son parallélisme initial avec les autres lames circulaires, par lequel son déboîtement oblique occasionnel va finalement permettre d'autoriser le passage de ces déchets non triturables qui, par leur dureté excessive ou leur excès de volume, finiraient autrement par bloquer le fonctionnement des axes triturateurs (-fig. 10 et 12-) grâce à l'installation de ressorts stabilisateurs (49) entre les lames circulaires autour de l'axe, pour obtenir le retour du lame circulaire à sa position verticale initiale.

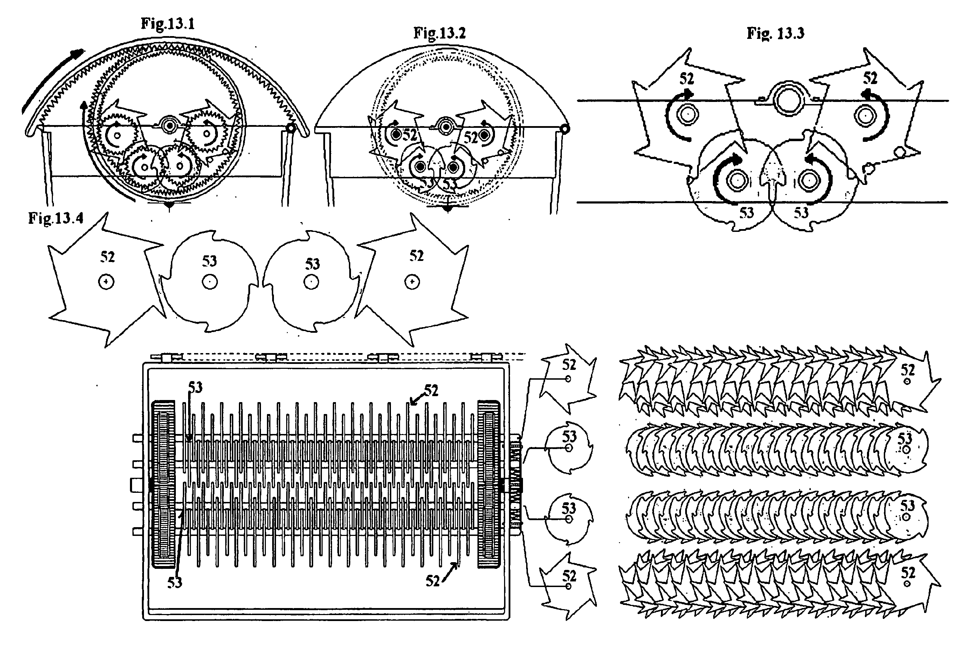

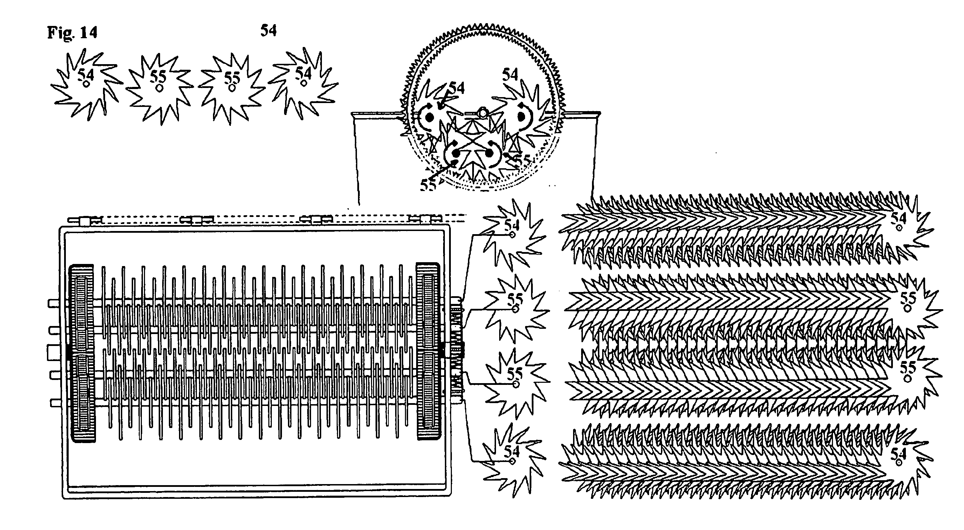

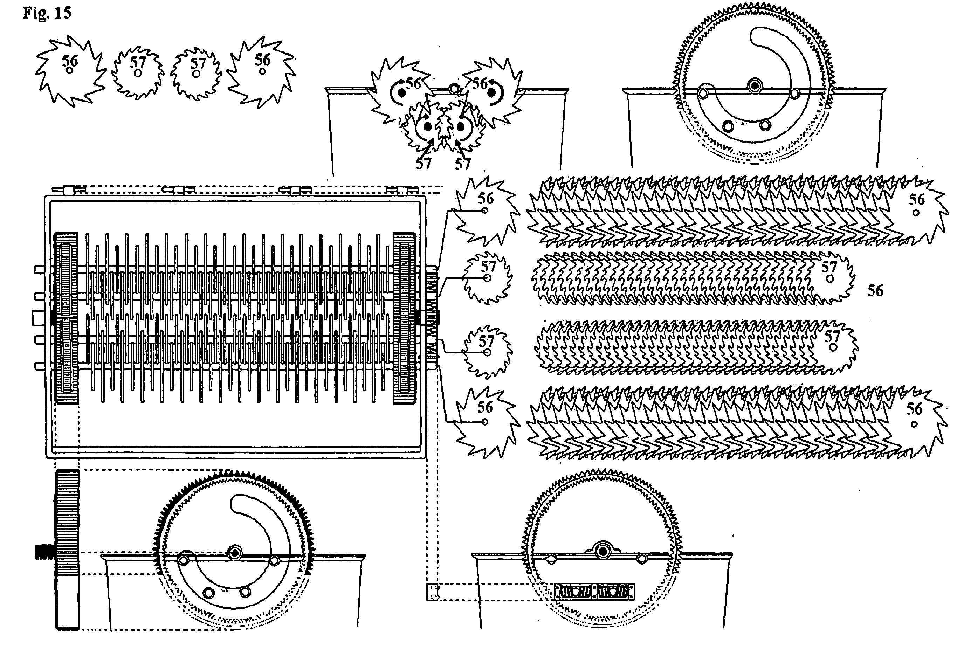

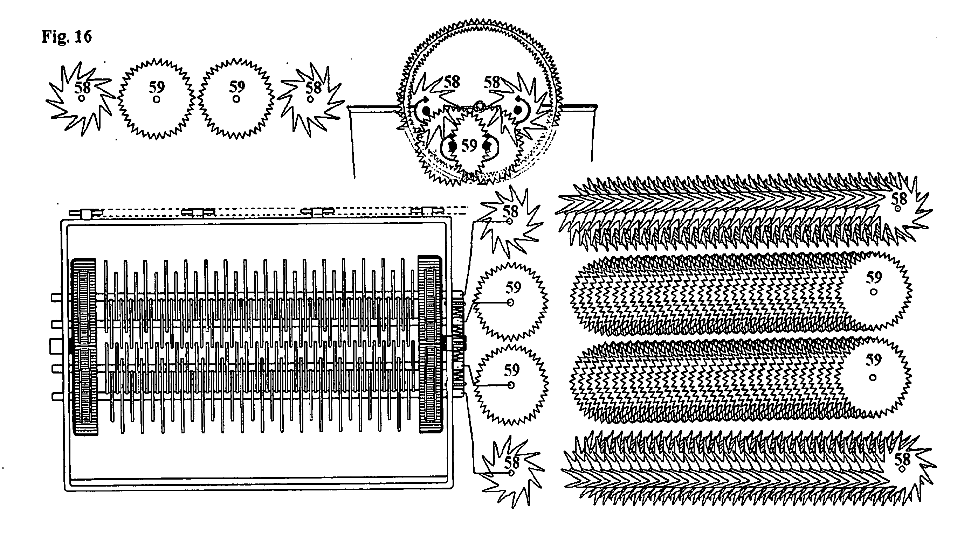

Quant au dessin de chaque type de lame circulaire, on propose que, pour le cas des récipients en métal, leurs lames circulaires soient un peu arrondies et robustes, -lesquelles sont dessinées à titre d'exemple dans la figure 13 avec six dents ou griffes dans les lames circulaires des axes supérieurs (52), et quatre dents ou griffes dans les lames circulaires inférieures (53) alors que, pour le cas des récipients en plastique, on prévoit que leurs lames circulaires incoporent une série de dents ou griffes plus coupantes, (-dessinés dans la figure 14 à titre d'exemple-) avec douze dents ou griffes dans les lames circulaires des axes supérieurs (54) et douze dents dans les lames circulaires inférieures (55) et que, pour le cas des tétrabiks, leurs lames circulaires soient plus fines, disposant de bords plus fins et coupants, dessinées à titre d'exemple dans la figure 15 avec douze dents dans les lames circulaires des axes supérieurs (56) et seize griffes dans les lames circulaires inférieures (57), établissant en même temps que, pour le cas des déchets en papier et carton leurs lames circulaires se trouvent situées avec une plus grande proximité entre elles, afin de provoquer une coupure déchirée sous la forme de petites bandes, suffisant pour cela que leurs lames circulaires inférieures disposent de la traditionnelle dent de scie (59), dessinées avec 40 dents à titre d'exemple dans la figure 16.

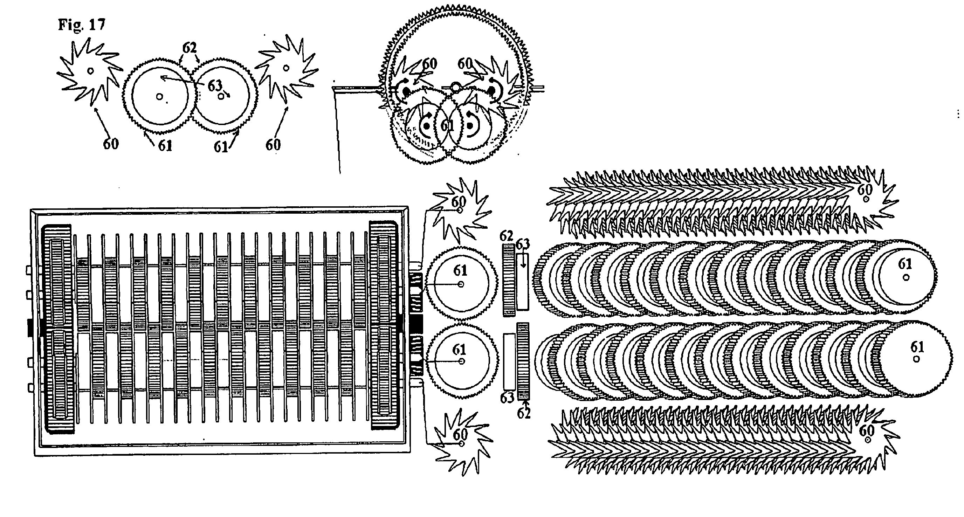

De la même manière on propose que, pour la matière organique, leurs axes incorporent des lames circulaires beaucoup plus larges (61) avec une section de quelques centimètres de largeur, et que les bords de leurs lames circulaires soient configurés avec des dents plus petites (62), leurs lames circulaires se séparant entre elles par de forts rouleaux de gomme, qui vont permettre de comprimer au maximum le volume de la matière organique, grâce à la plus grande densité du disque en caoutchouc intercalé entre les disques de lames circulaires (63) de chaque axe (-figure 17-).

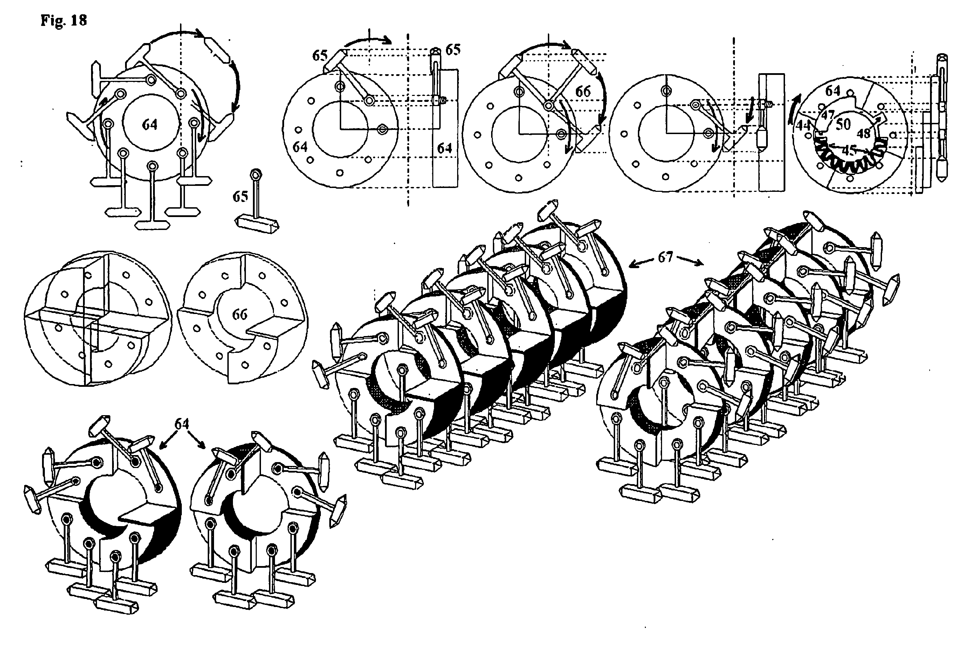

À son tour, le système que l'on propose pour broyer les récipients vitreux est basé sur un ensemble de disques consécutivement emboîtables les uns avec les autres (66) caractérisés en ce que chacun d'eux dispose d'une série de petits marteaux (65) qui se trouvent unis avec leur disque par leurs bras articulés respectifs -lesquels dans notre cas et à titre d'exemple, sont dessinés dans la figure 18 au nombre de huit (64) de telle sorte que, chacun des quatre secteurs circulaires qui composent chaque disque à la manière d'un échelon disposant de deux petits marteaux, un tour de chaque disque en forme d"'escalier" (67) en hélice produit le frappement ou ses coups de marteau respectifs dans tous les points de la zone de concassage du verre dans la zone centrale du conteneur, au moins par les deux petits marteaux de chacun des deux rouleaux de disques dans chacun des points de la zone destinée au concassage des récipients vitreux qui, dans notre cas, en comptant sur deux petits marteaux dans chacun des quatre secteurs quadrangulaires de chaque disque, et en disposant d'au moins deux rouleaux de disques à rotation contraire, leur fonctionnement produit le frappement des huit petits marteaux dans chacun des points de concassage à chaque tour de chaque disque de marteaux.

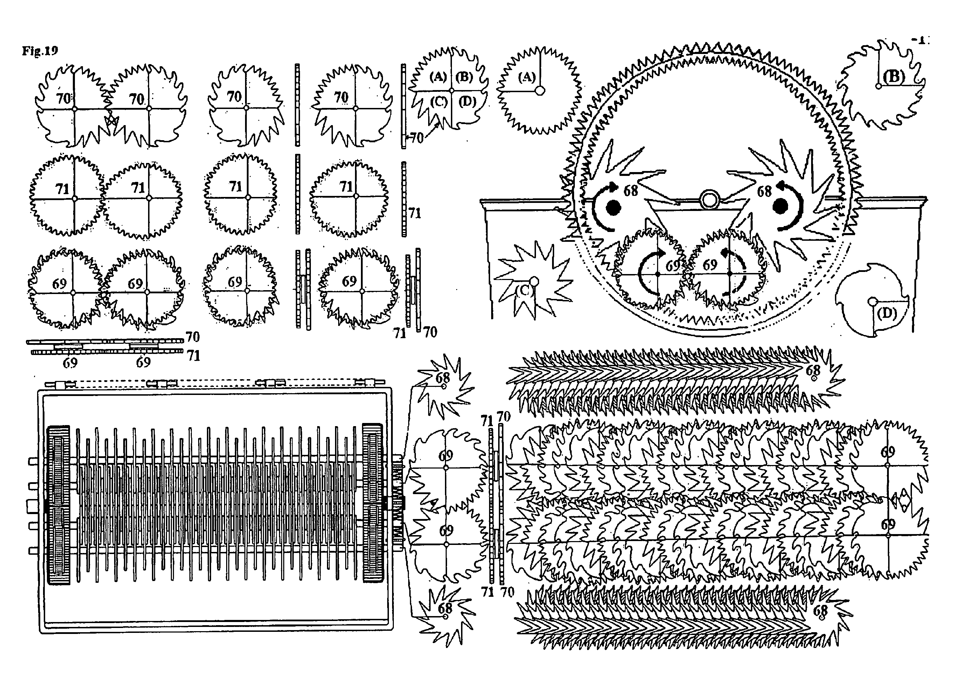

Finalement, pour le ramassage de déchets non recyclables ou de rejet (fig.19) il est prévu que leurs lames circulaires (68 et 69) consistent en un mélange des différents types de lames circulaires antérieurement exposés, à savoir : -du type de lames circulaires pour boîtes de conserve et récipients en métal, -pour les récipients en plastique, - en tetrabricks, et - en papier et carton ( excluant le type pour la matière organique et les petits marteaux prévus pour le système des récipients vitreux), combinant chacun de ces quatre types de bord de lame circulaire, de façon rotative dans chaque secteur quadrangulaire de chaque lame circulaire ( 70) chaque lame circulaire s'insérant dans son axe respectif, en alternant sa position de placement de façon rotative pour chaque quart circulaire, chaque groupe de quatre lames circulaires suivies présentant par conséquent une face différente de façon consécutive ) afin de que leur rotation continue à 360 degrés garantisse le broyage des déchets dans n'importe laquelle des quatre modalités de trituration antérieures, avec la double caractéristique spécifique, pour le broyage de ce type de déchets hétérogènes que, d'une part, leurs lames circulaires ont une configuration non plus circulaire, mais plutôt ovale -avec forme d'oeuf- (71), et que, d'autre part, leur rotation va être réalisée sur un point de rotation "excentrique" et à la fois synchronique avec son axe contraire, dont la lame circulaire contraire, elle aussi ovale, va rester de façon permanente en contact avec l'antérieur, - en dépit du fait que sa forme ovale identique - puisque, bien que cette deuxième lame circulaire ait également une rotation excentrique, elle se présente en face de l'autre lame circulaire avec une présentation focale opposée de 90 degrés à la première, comme indiqué dans le figure 19, la rotation normale de leurs axes produisant un effet de serpentement dans la zone de confrontation de leurs lames circulaires, vu depuis le dessus.

Mais ce qui rend ce système mécanique de trituration encore plus intéressant est la fonction de cliquet qu'a chacun des roulements (15) que logent les axes de lames circulaires qui se trouvent encastrés dans le châssis, puisque (-comme ce qui se produit avec le dispositif de roulement de la roue arrière d'une bicyclette, ) ce dispositif de roulement ne permet la rotation indéfinie des axes de lames circulaires que dans une seule direction: - celle d'entrée des déchets de façon continue, en profitant au maximum de la capacité du conteneur, sans que le dispositif du roulement de cliquet ne permette la rotation contraire des axes de lames circulaires lorsque les tambours latéraux tournent en sens opposé, puisque ce dispositif de roulement ne permet que sa rotation dans le sens initial de façon indéfinie, empêchant ainsi la sortie de déchets dans la direction contraire à son avalage préalable ( comme ce qui se produit avec le dispositif de roulement de la roue arrière d'une bicyclette qui continue de tourner vers l'avant alors que les pédales ne tournent pas), ceci permettant son remplissage jusqu'à sa limite maximale ( toujours variable de par le caractère circonstanciel de chaque type de déchets et en raison de leur composition spécifique dans chaque cas) menant à l'écrasement lent et progressif de son contenu, par la simple fonction d'avalage permanent ou continu que lui permet ce dispositif de cliquet.

C'est pourquoi, si un seul déplacement du couvercle n'est pas suffisant pour triturer et avaler tous les déchets, il suffira de recommencer à actionner de nouveau le couvercle d'entrée et de répéter l'action jusqu'à leur avalage final.

Sa seule limite va être le blocage qu'il est prévu qu'il se provoque dans la rotation des tambours latéraux par l'ascension du châssis comme conséquence de la poussée ascendante provoquée par le remplissage excessif de déchets jusqu'à la zone supérieure du conteneur, ce qui provoquera la sortie du châssis de sa position initiale, comme conséquence de l'élévation du bord frontal du châssis sur ses propres charnières fixes situées sur la paroi du fond dudit châssis, et dont l'élévation du châssis cité va empêcher le passage du couvercle coulissant, qui est l'origine du mouvement de tout le système mécanique.

Une autre possibilité du présent système de broyage réside dans le fait que la transmission du mouvement de déplacement du couvercle coulissant supérieur, par le biais duquel se produit la rotation des deux tambours latéraux du container, se produit non pas à l'occasion du déplacement dudit couvercle supérieur du container lorsque celui-ci est déplacé manuellement vers sa paroi du fond pour son ouverture, mais que ce mouvement de rotation des tambours mentionnés est au contraire actionné lorsque, à l'occasion de la fermeture du couvercle du container, ledit couvercle supérieur est rabattu pour sa fermeture, garantissant ainsi que les opérations plus ou moins dangereuses de broyage des déchets aient lieu une fois le couvercle totalement fermé ou presque fermé, évitant ainsi de possibles risques qui, comme le possible coinçage d'une cravate, pourraient se produire dans le cas d'une rotation des rouleaux de lames avec le couvercle ouvert, cette configuration permettant d'éviter de tels risques, grâce à cette fonction inversée d'attaque du cliquet à la fois aidée par la prévision d'un couvercle du type visière (2) qui, uni au couvercle coulissant cité par une charnière de 360^{a}, tombe verticalement sur ledit couvercle à la manière d'une basque frontale lorsque le couvercle est fermé, en même temps qu'il agit comme surcouvercle de sécurité, au niveau de la trémie de broyage, lorsque le couvercle coulissant cité se trouve fermé à la fin de son parcours d'ouverture, la levée du surcouvercle cité en arrière suffisant au rejet des déchets, ledit surcouvercle retombant sur la zone de broyage après le rejet des déchets-, les fonctions de broyage ne pouvant pas débuter avant que le couvercle coulissant supérieur du container ne commence à se fermer, la sécurité des opérations de broyage est alors garantie étant donné que la bouche ou trémie destinée à l'entrée de déchets se trouve -

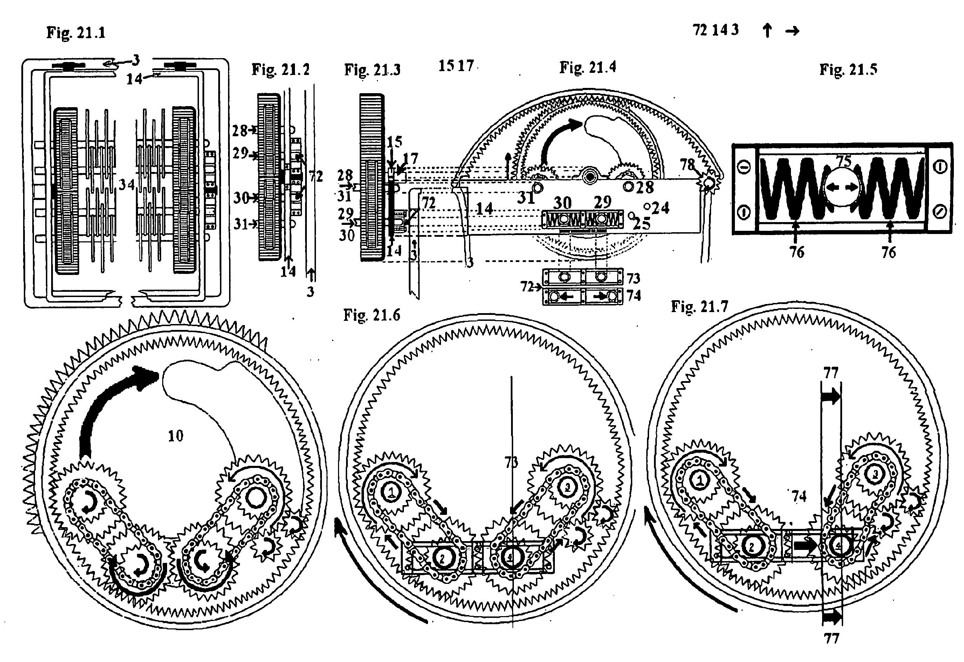

Finalement, quant aux problèmes pouvant naître de l'engorgement des axes triturateurs suite à l'entrée de déchets d'une largeur supérieure à la largeur de passage que tolère la distance entre ses axes inférieurs, -en plus des tolérances que permettent les précédents systèmes de ressorts déjà incorporés dans les propres lames circulaires, et du système antérieur de torsions obliques que peuvent supporter ces lames circulaires entre elles sur leur axe-, ce système prévoit un dernier système de "tolérants" -prévus dans la figure 21-, dont le but est de gagner ou surpasser la résistance initiale que produirait une position fixe des axes triturateurs inférieurs dans le châssis, consistant en l'installation d'un système de deux ressorts "tolérants" (72) placés dans n'importe laquelle des extrémités gauche ou droite ou dans les deux extrémités de chaque axe à la fois, ces deux ressorts tolérants (76) restant placés de façon perpendiculaire à la direction de l'axe respectif dans chacune des boîtes ( 75) situées sur les côtés gauche ou droit du châssis (-comme représenté à titre d'exemple pour le côté droit dans les figures 21.1, 21.2 et 21.3-); boîtes destinées à loger les extrémités de ces axes inférieurs, et dont l'unique mission est de permettre qu'un angle de passage puisse être ouvert ( 77) afin de permettre de casser le parallélisme habituel des deux axes inférieurs de lames circulaires ( 73) pour permettre le déblocage - comme ce qui se produit lorsque l'on ouvre des ciseaux (74), le contrôle rotateur des extrémités de ces axes inférieurs dans le tambour droit cité restant finalement garanti par l'effet enveloppant d'une chaîne (11) métallique de sécurité qui unit -au moyen de son engrenage- les roues dentées R-3 et R-4, à l'intérieur de son tambour (-comme représenté dans le dessin 21.2 et le dessin 21.3) puisque, malgré le fait que ladite roue dentée R-4 puisse perdre sa position initiale par son déplacement occasionnel à l'intérieur de sa caisse-nid, ladite roue R-4 va nécessairement pivoter grâce à la tension que la roue dentée mineure R-6 va exercer sur la chaîne mentionnée (25), dont l'axe tenseur va faire que la chaîne métallique citée se trouve de la même manière tendue, en dépit du changement de position de départ de la roue R-4 mentionnée.

Va également se produire le déplacement forcé de l'axe inférieur E-2 par le glissement de son extrémité dans un autre nid de ressorts identique logé dans le châssis, bien que celui-ci soit disposé en position oblique et sans la prévision d'une chaîne étant donné que son déplacement forcé va suivre une direction oblique ascendante grâce au fait que l'extrémité dudit axe de lames circulaires se trouve condamnée à son contact moteur permanent avec la bande dentée de roulement interne de l'anneau du tambour droit.

À son tour, pour le nettoyage permanent des quatre axes de lames circulaires, est prévue l'installation d'un peigne métallique qui devra se situer sous chaque axe, avec la prévision de rotation de chacune de ses pointes par rapport à leur axe longitudinal, de façon à ce que ses pointes puissent garantir de manière permanente le nettoyage et le débouchage des déchets pouvant rester attrapés entre les lames, avec la prévision de son assujettissement fixe au châssis pour le cas des axes supérieurs, bien que pour le nettoyage des axes inférieurs, vue la possibilité qu'ont leurs extrémités droites de se déplacer sur la largeur permise, il est prévu que l'assujettissement de leurs peignes puisse être réalisé non pas sur le châssis, mais grâce à une petite fourche directement sujette aux axes inférieurs qui les suive de façon parallèle et de manière permanente.

De la même manière, pour pouvoir expulser les déchets en dehors du conteneur, on prévoit l'installation d'une paire de crochets courbés d'ouverture / fermeture dans le bord inférieur du côté frontal du châssis, de façon à ce que, bien que ces crochets se trouvent habituellement accrochés au bord supérieur de la face frontale du conteneur sous l'effet de la pression exercée par leurs ressorts sur ces crochets, cette pression puisse être libérée par la pression que va exercer le peigne du bras élévateur du camion sur les gâchettes placées dans le creux de la partie supérieure de la face frontale du récipient, provoquant la libération des crochets du châssis.

Aussi est-il prévu, bien que de façon facultative, que l'on on puisse placer, au fond du récipient du conteneur mentionné, une simple bascule domestique avec indicateur électronique de poids, dont le plateau récepteur du poids se situe entre le fond du récipient et le fond du conteneur, vu son petit coût économique, dont l'alimentation électrique peut s'effectuer ou bien grâce à une simple pile ou bien grâce à une dynamo d'auto-rechargement (-commercialisées sur le marché comme les lampes de poche rechargeables par la rotation de leur dynamo- ) à placer dans n'importe quelle extrémité des axes de lames circulaires, -incluse la possibilité de placer d'autres dynamos complémentaires sur les axes des deux tambours latéraux-, son indicateur électronique de poids pouvant se situer dans la zone supérieure de la face frontale du conteneur de façon à ce que, grâce à leurs systèmes traditionnels de mémoire de poids, il puisse nous montrer, entre autres choses, la quantité de kilogrammes de déchets qui sont introduits à chaque fois que ce conteneur- triturateur est utilisé, ou bien la remise ou l'envoi du poids réel de ses déchets à un hypothétique centre opérationnel de contrôle municipal de ramassage de données, ou encore un avis annonçant que tel conteneur est plein envoyé au même centre, suffisant pour cela d'incorporer à ce circuit électrique un système d'émission de messages SMS par le biais d'un simple téléphone portable ( dont le rechargement électrique peut se faire de la même manière grâce à une pile ou à travers un système de dynamos auto-rechargeables -) de telle sorte que, quand le châssis s'élève au-dessus du bord frontal du récipient suite à son remplissage excessif, un signal permanent de "court-circuit" puisse se produire, par lequel, combinant cette donnée avec celle des kilogrammes introduits, on puisse garantir que ce signal répond à son remplissage réel excessif avec l'avantage ajouté que, étant donné que cette information peut être fournie en temps réel, on peut savoir à tout moment quels conteneurs sont pleins et ainsi articuler un système de feuille de route de ramassage, au moyen d'un simple programme de "navigateur GPS" qui puisse organiser les routes circulatoires les plus économiques pour leur ramassage, comme le font déjà quelques programmes de recherche d'Internet.

Alternative électrique (voir figure n 24 ): Comme première alternative, quoique moins écologique, on peut remplacer l'origine mécanique provoquée par le déplacement manuel du couvercle coulissant supérieur du conteneur, par l'installation d'un moteur électrique ( 95) à placer sur le châssis du conteneur de façon à ce qu'il soit isolé du récipient, son alimentation électrique pouvant provenir (98) ou bien d'un réseau externe d'alimentation, ou bien d'une batterie portative (96) incorporée au conteneur, cette variante de conteneur électrique se caractérisant en ce que la force motrice des tambours provient non plus de son couvercle supérieur, mais du moteur cité, logé sur son châssis, dont l'axe moteur peut rester disposé ou bien sur un tambour latéral ou bien sur les deux, ou bien près du tambour cité, au moyen d'un système de roues dentées garantissant le mouvement motorisé de chaque tambour.

C'est ainsi que l'on a prévu, comme position alternative du moteur mentionné, la possibilité de placer ce moteur de façon longitudinale au fond du conteneur, le long de la zone centrale de sa base, de telle sorte que, les extrémités de cet axe dépassant des parois latérales gauche et droite du conteneur cité dans sa zone inférieure centrale, cette extrémité motrice de l'axe puisse mettre en mouvement chacun des tambours latéraux gauche et droit grâce à des axes de transmission dentée conique, ou même au moyen de courroies à poulies ou chaînes pour roues dentées, ces chaînes de transmission motrice restant placées de façon isolée par rapport au récipient de déchets, protégées sous une carcasse latérale indépendante, avec la prévision de son ouverture par un couvercle externe pourvu de charnières pour son entretien mécanique ou réparation occasionnelles, prévoyant également, pour le cas des courroies ou des chaînes, l'installation, dans la partie supérieure externe du récipient et sous la carcasse, d'un système de changement de roulements (-à la manière du système de changement de vitesses d'une bicyclette-) pour permettre que ces courroies à poulies ou chaînes de transmission latérale passent depuis le roulement de l'axe du tambour à une autre roue dentée identique située près du roulement cité de l'axe du tambour de façon parallèle à celui-ci, dans le but de permettre ainsi que, une fois ce système de changement de roulements actionné au moyen d'un levier externe de changement, ce levier puisse faire passer la chaîne ou les poulies depuis le roulement du tambour jusqu'au roulement parallèle, et ainsi libérer les tambours latéraux et leur châssis de leur lien ou attache aux chaînes de transmission citées, de telle sorte que puisse s'effectuer la sortie libre du châssis de sa position habituelle pour permettre la sortie des déchets du récipient, les tambours latéraux ne se trouvant plus enchâssés à leurs chaînes motrices respectives, étant également prévue, pour que le déplacement de la chaîne motrice grâce au système de changement de roulements mentionné puisse se produire, une tolérance de tension dans la chaîne citée, grâce à la prévision d'une roue complémentaire avec fonction tenseuse, disposée le long du parcours vertical de ladite chaîne, qui lui donnera la tolérance et tension demandée.

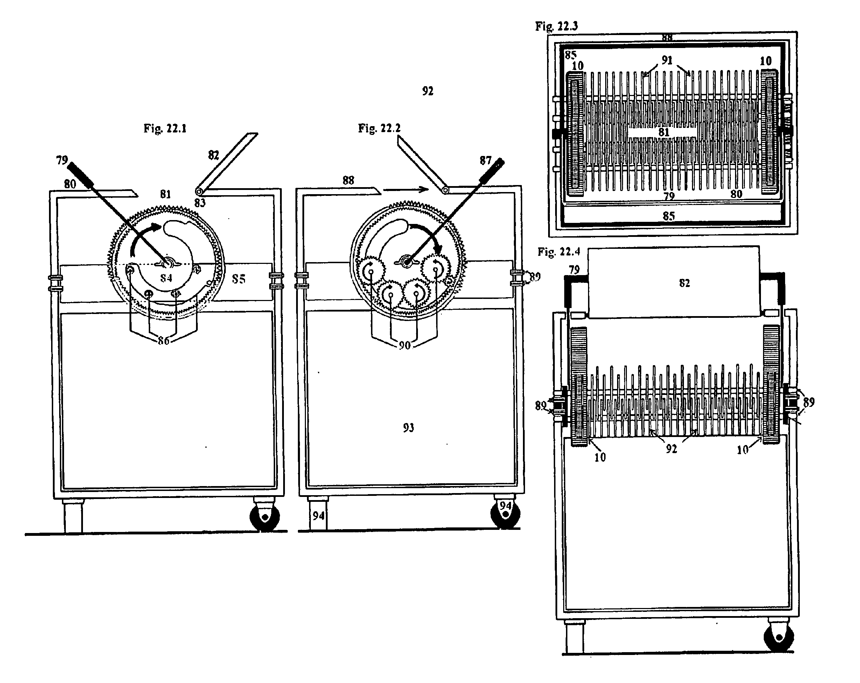

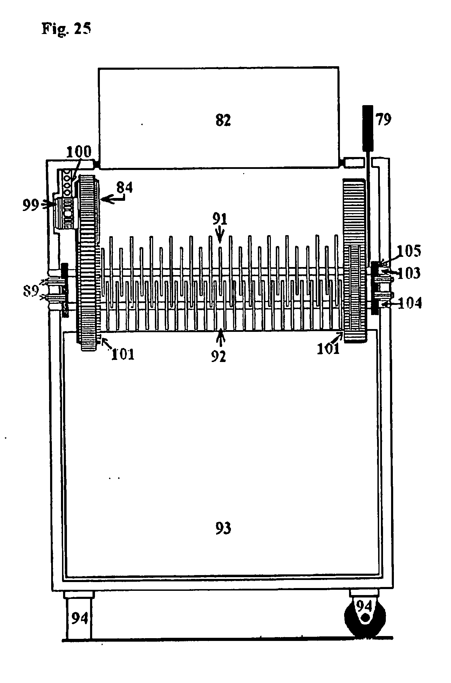

### Alternative de conteneur-triturateur domestique: (-voir figures 22 et 25.1,):

La variante domestique de conteneur-triturateur est également prévue, bien qu'aux dimensions moindres, avec des alternatives motrices de broyage identiques, à savoir : manuel ou électrique, y compris son système mixte, le type de conteneur-triturateur domestique se caractérisant en ce que, bien que l'alternative mobile de conteneur-triturateur soit possible, -c'est-à-dire: avec roues (94) et de dimensions plus réduites que celui destiné à un usage sur la voie publique-), la variante du conteneur triturateur "fixe" est aussi possible , (-de dimensions réduites également-), à placer dans un module d'armoire, ou à placer par exemple sur le banc de la cuisine (88), ou dans la galerie, etc, avec la prévision d'incorporation de tous les types de lames circulaires étudiés dans le système de lames circulaires basiques (bien qu'il semble que le système mixte de lames circulaires pour déchets non recyclables ou de rejet soit le plus approprié, -) étant incorporées à cette alternative de conteneur domestique toutes les revendications définies antérieurement dans le modèle basique ou général.

A leur tour, toutes ces variables du conteneur-triturateur domestique sont caractérisées en ce que son couvercle de sécurité ne permet d'actionner son système de trituration que si la sûreté de son fonctionnement est garantie, soit parce que, quand les lames circulaires sont en mouvement, le couvercle d'entrée est fermé (-que sa force motrice soit d'origine mécanique ou électrique-), soit parce que, quand le couvercle est ouvert, il y a une grille de sécurité située entre le couvercle et les lames circulaires, qui ne permet que le passage des petits déchets, empêchant ainsi l'entrée possible d'extrémités du corps de l'usager, comptant également sur la prévision d'un interrupteur dans la partie externe supérieure près de la bouche du conteneur-triturateur permettant à l'usager d'arrêter le moteur et d'enclencher la marche arrière pour éliminer ses obstructions possibles -pour le cas de l'alternative électrique-, ou la prévision d'un levier manuel de freinage - pour le système manuel -, qui freine l'action tournante des axes de lames circulaires, grâce au fait que ledit levier fasse sauter le boulon de freinage situé au-dessous de la roue R- 2 devant de la zone de contact moteur avec la bande dentée interne de roulement du tambour, qui est celle qui met en mouvement les deux axes inférieurs de lames circulaires.

### Variété de développement de rotation des lames circulaires triturateurs:

Si l'on considère que chaque opération d'ouverture mécanique du couvercle n'est pas suffisante pour la trituration de quelque type spécifique de résidus ou si l'on considère convenable que chaque axe de lames circulaires développe plus d'un tour à chaque ouverture du couvercle, il suffira de placer une roue dentée de double développement entre les bandes de roulement latéral que contactent avec les appuis inférieurs gauche et droit du couvercle, et les bandes de roulement des tambours gauche et droit, d'une telle sorte que la roue dentée qui entre en contact motrice avec le couvercle, mette simultanément en mouvement une autre roue dentée concentrique à elle-même, -cette dernière roue dentée -qui dispose d'un nombre de dents double (-ou triple, ou quadruple, etc -) étant celle chargée de mettre en mouvement la bande de roulement dentée de chaque tambour latéral.

### Indication de la manière avec laquelle l'invention est susceptible d'application industrielle:

En ce qui concerne les matériaux avec lesquels on peut construire ce conteneur -triturateur, il est nécessaire de mentionner que toutes ses pièces peuvent être construites avec des matériaux très communs sur le marché, tels que plastiques pour le récipient du conteneur, et différents métaux pour le reste des mécanismes du système ( par exemple acier pour les axes de lames circulaires, ou pour les roues dentées, ou pour les tambours, ou pour les lames circulaires), ou encore plastiques de grande résistance ou dureté et caoutchoucs pour quelques autres pièces, pour lesquelles ce matériau peut résulter satisfaisant, et même la possibilité ou opportunité d'utiliser le duralumin pour le châssis (- vues les fortes torsions que celui-ci va devoir supporter par les pressions que vont exercer sur lui-même tant les tambours latéraux que les axes de lames circulaires -), ce qui va permettre au présent système de conteneurs triturateurs de réduire son poids, sans perdre de résistance, considérant qu'il n'est pas nécessaire de faire cette description plus étendue pour qu'un expert en la matière puisse comprendre cette invention et les avantages qui en dérivent, semblant convenable de prévenir que la composition matérielle de chaque type de pièce, leur forme, leur taille, ou la disposition de leurs éléments, n'ont pas été spécifiées de façon plus précise pour des raisons de pure convenance, pour leur brevetabilité, dans la mesure où celles-ci peuvent être l'objet d'une variation,- tandis que cela ne suppose pas d'altération de l'essence de l'invention-, raison pour laquelle il doit être pris en compte que les limites dans lesquelles cette description a été rédigée devront toujours être prises dans un sens large et non limitatif.

## Revendications

1. Conteneur-triturateur de ramassage sélectif de déchets ménagers qui dispose, dans toutes les modalités prévues pour chaque type de déchets, y compris les variables du conteneur -triturateur domestique-, d'un mécanisme qui contient: -un châssis rectangulaire (14) placé dans la partie supérieure du récipient conteneur, - deux tambours latéraux dentés (10) supportés sur les parois latérales gauche et droite dudit châssis , avec la possibilité de tourner autour de leurs propres axes (17);- un couvercle coulissant supérieur (1) avec des rails -à courroie dentée- de roulement (9), situés sur les côtés gauche et droit de la partie inférieure du couvercle, avec la possibilité d'interaction avec les dents des courroies dentées externes (9) de chacun des tambours latéraux; -un mécanisme de roues dentées (20, 25) situées à l'intérieur de chaque tambour côté, fonctionnellement connectés entre eux, d'une manière cycloïdal, épicycloïdal ou planétaire, dont les roues sont fixées aux extrémités de chaque axe, avec la possibilité d'interagir fonctionnellement avec les dents internes de ladite tambours latéraux; - quelques axes supérieurs parallèles (28, 31) de lames circulaires avec leurs lames parallèles respectives (39), dont les lames sont disposées perpendiculairement à son axe respectif, destinées pour l'approximation des déchets; --quelques axes inférieurs parallèles (29, 30) avec leurs respectifs lames parallèles inférieurs (40), également perpendiculaire à son axe, destinés à la trituration des déchets, étant chaque groupe de lames de forme parallèle et interposés les uns avec les autres, avec possibilité de rotation opposés entre eux, et -un mécanisme de pédale (4,12,13, 7 et 8) pour ouvrir le couvercle

2. Conteneur-triturateur de ramassage sélectif de déchets ménagers selon la revendication 1 **caractérisé en ce que** son mécanisme moteur de trituration dispose d'un couvercle coulissant incurvée (1) qui présente bandes dentées de roulement (9) situées sur les côtés gauche et droit de la face inférieure du couvercle qui sont en contact avec les bandes dentées de roulement situées sur la face extérieure cylindrique de chacun des deux tambours latéraux (9) avec la possibilité qu'une déplacement éventuel horizontale (16) dudit couvercle (1) vers sa zone arrière (pour l'ouverture) peut provoquer le mouvement de rotation de ses deux tambours latéraux (10) supporté par leurs axes respectifs (17), qui sont ancrées sur les parois latérales gauche et droite du châssis , dont les axes sont différents des axes latéraux (6) autour duquel le couvercle coulissant tourne, et dont l'action éventuelle de la rotation simultanée des deux tambours peut provoquer l'action de rotation simultanée de tous les axes de lames.

3. Conteneur-triturateur de ramassage sélectif de déchets ménagers selon la revendication 1 **caractérisé en ce qu'**il prévoit une barre-pédale horizontale (4) situé au-dessous du côté frontal du conteneur , relié par ses extrémités latérales gauche et droite à leurs latéraux leviers respectifs (12), dont les leviers sont articulés à balancer autour de leurs axes respectifs intermédiaires -supportés sur les parois latérales gauche et droite du récipient-, et dont latéraux leviers ont dans l'autre externe leur rouleau respectif dentée (13), qui sont à son tour en contact avec inférieurs roues dentées ancrées dans les parois latérales gauche et droite du récipient (8), où chaque roue dentée inférieure est fixé concentriquement à chaque grand roue dentée (8), qui est reliée à leur tour, par sa respective chaîne (7) à chacun des coins postérieurs gauche et droite du incurvée couvercle coulissant, étant prévu une petite roue dentée folle (78) de support défensif dans chacun des coins postérieurs supérieurs gauche et droite du conteneur.

4. Conteneur-triturateur de ramassage sélectif de déchets ménagers selon la revendication 1, **caractérisé en ce qu'**il prévoit l'installation de deux tambours latéraux (10) qui tournent autour de leurs axes respectifs (17), encastrés dans le châssis au moyen leurs roulements respectifs (38) dont les faces cylindriques interne et externe du tambour cité, disposent de bandes dentées de roulement (9),et que la paroi de fond circulaire du chaque tambour comporte une zone de guidage ou de «bande semi-circulaire perforée" pour permettre le passage des axes de lames (18 et 19) à travers ladite paroi de fond.

5. Conteneur-triturateur de ramassage sélectif de déchets ménagers selon la revendication 1 **caractérisé en ce qu'**il prévoit l'installation d'un châssis (14), -consistant en une espèce de boîte rectangulaire de hauteur réduite, sans base ni couvercle, qui se trouve situé dans la frange supérieure de l'intérieur du conteneur, lié au récipient du conteneur par charnières (41) situées sur le dessus de la paroi arrière du conteneur-, dont la fonction est de soutenir sur leurs parois latérales gauche et droite les tambours latéraux et les axes de lames, à travers leurs roulements respectifs.

6. Conteneur-triturateur de ramassage sélectif de déchets ménagers selon la revendication 1 **caractérisé en ce qu'**il prévoit la mise en place de roues dentées (-20, 21, 22, et 23) dans les extrémités gauche et droite de chaque axe de lames (-28, 29,30 et 31-) à la hauteur de la face intérieure de chaque tambour latéral, dont les axes de lames peuvent être entraînés par lesdites roues dentées qui sont sous l'action de rotation des deux tambours latéraux (10).

7. Conteneur-triturateur de ramassage sélectif de déchets ménagers selon la revendication 1 **caractérisé en ce qu'**il prévoit que l'assujettissement des lames circulaires sur leur axe soit mobile ou tournant, et non fixe, au moyen d'un ressort circulaire situé dans sa zone de support axial (47), qui est fixé à ladite lame par une de ses extrémités, à la fois qui, l'autre extrémité du ressort a pour fonction de supporter la poussée finale de la came (48) de l'axe, si son axe (50) tourne, ce système antiblocage peut incorporer un type différente du ressort pour chaque type de déchets, et la possibilité de régler la longueur de course dudit ressort circulaire, grâce à leur vissé de forme réglable dans son logement circulaire.

8. Conteneur-triturateur de ramassage sélectif de déchets ménagers selon la revendication 1 **caractérisé en ce que** qu'il prévoit que l'assujettissement de la lame circulaire à son axe ne soit pas fixe mais mobile dans un second sens, par la possibilité que ladite lame peut osciller en forme oblique- latérale (50 51) avec respect au plan perpendiculaire au l'axe dans lequel ladite lame est positionnée, qui est due à ce que, chacun lame peut pivoter sur chacune des bases sphériques qui l'axe a, à chaque point d'appui de chaque lame, ce second systéme antiblocage peut incorporer stabilisants ressorts (49) à placer autour de l'axe entre leurs lames respectives.

9. Conteneur-triturateur de ramassage sélectif de déchets ménagers selon la revendication 1 **caractérisé en ce que** il est prévu -comme une variété de lames- des lames circulaires pour la trituration des récipients en métal (52 et 53) dont les griffes ont des bords émoussés et robustes, ayant six griffes dans les lames circulaires des axes supérieurs et quatre griffes dans les lames circulaires des axes inférieurs.

10. Conteneur-triturateur de ramassage sélectif de déchets ménagers selon la revendication 1 **caractérisé en ce que** il est prévu -comme une variété de lames- des lames circulaires pour le broyage des récipients en plastique (54 et 55) dont les griffes ont des bords coupantes, ayant douze griffes dans les lames circulaires des axes supérieurs et douze griffes dans les lames circulaires des axes inférieurs.

11. Conteneur-triturateur de ramassage sélectif de déchets ménagers selon la revendication 1 **caractérisé en ce que** il est prévu --comme une variété de lames- des lames circulaires pour le broyage de tétra-briques (56 et 57) dont les griffes ont des bords coupantes, ayant douze griffes dans les lames circulaires des axes supérieurs et seize griffes dans les lames circulaires des axes inférieurs.

12. Conteneur-triturateur de ramassage sélectif de déchets ménagers selon la revendication 1 **caractérisé en ce que** il est prévu --comme une variété de lames- des lames circulaires pour le broyage du papier et du carton (58 et 59) qui disposent des traditionnelles dents de scie.

13. Conteneur-triturateur de ramassage sélectif de déchets ménagers selon la revendication 1 **caractérisé en ce que** il est prévu -comme une variété de lames- des lames circulaires pour le broyage de la matière organique (60 61) avec une section de quelques centimètres de largeur, dont le bord est denté (62), étant prévu que leurs lames circulaires se trouvent séparées entre elles par rouleaux de gomme (63) intercalés entre les lames circulaires de chaque axe.

14. Conteneur-triturateur de ramassage sélectif de déchets ménagers selon la revendication 1 **caractérisé en ce que** il est prévu -comme une variété de lames- des disques pour le broyage des récipients vitreux (64 a 67) qui disposant d'une série de petits marteaux (65) unis au disque par leurs bras articulés respectifs dans chaque secteur quadrangulaire du disque, configurés à la manière d'échelons (66) en forme d'un "escalier en colimaçon" ou en hélice.

15. Conteneur -triturateur de ramassage sélectif de déchets ménagers selon la revendication 1 **caractérisé en ce que** il est prévu -comme une variété de lames- des lames circulaires inférieures Pour le broyage des déchets non recyclables (69) qui contiennent un mélange des quatre premiers types de lames circulaires avant exposés, avec l'insertion de chacun de ces quatre types de bord du lame, de façon rotative, dans chaque secteur quadrangulaire de chaque lame circulaire (70), en combinant l'emplacement de chaque lame dans son respectif axe, en alternant sa position de placement de façon rotative par chaque secteur circulaire, en caractérisant ces lames parce que ont une configuration non circulaire mais ovale (71), et parce que sa rotation est effectuée sur un point de pivotement "excentrique" et, à son tour, solidaire et synchronique par rapport à l'autre lame ovale Installé dans l'axe opposé, avec laquelle est en contact permanent, en dépit de leur identique forme ovale, en raison de cette seconde lame effectue également une rotation excentrique, mais sur un point de pivotement avec présentation focale opposé, de 90 degrés à la première.

16. Conteneur -triturateur de ramassage sélectif de déchets ménagers selon la revendication 1 **caractérisé en ce que** il est prévu que les roulements (15) sur lesquels ses axes de lames tournent incorporent une fonction de cliquet, (-tant dans les roulements (15) situés entre les axes de lames et le châssis, comme dans les roulements situés entre chaque axe de lames et les roues dentées qui s'engagent avec chaque tambour-) dont les roulements avec fonction de cliquet seulement transmet à chaque axe de lames le mouvement de rotation -provoqué par les tambours, à travers leurs respectives roues dentées- uniquement dans la direction d'ingestion de déchets vers la zone centrale du récipient.

17. Conteneur- triturateur de ramassage sélectif de déchets ménagers selon la revendication 1 **caractérisé en ce que** il est prévu que la rotation des tambours (10) et du axes de lames (-28, 29, 30 et 31)- est produit par le déplacement du couvercle coulissant du récipient (1) quand nous attirons ce couvercle vers nous, à sa position d'origine , (-Pour de fermer le couvercle-),- étant prévu un second couvercle de type "visiere" - (2) qui est suspendus verticalement d'une charnière de 360° située à l'extrémité frontale de dite couvercle coulissant dans la positon fermée, agissant comme une jupe de sécurité, à la hauteur de la zone de broyage, qui empêche la fonction de broyage quand ledit couvercle coulissant est à la fin de course de son ouverture, jusqu'à ce que ce couvercle-"visiere" est abaissé, et l'entrée de résidu est déjà couverte.

18. Conteneur- triturateur de ramassage sélectif de déchets ménagers selon la revendication 1 **caractérisé en ce que** il est prévu la disposition d'un système de ressorts "tolérants" (72), consistants en une boîte située sur les parois latérales du châssis, qui accueillent deux ressorts (76) positionnés perpendiculairement à la direction des axes inférieurs de lames (73, 74) dont la fonction est donner plus passage de largeur, et donner stabilité aux extrémités de chaque axe inférieur, étant également prévu l'existence d'une chaîne de sécurité (11), qui relie la roue dentée R-3-(22) de l'axe supérieur, avec la roue dentée R-4 (23) d'un axe inférieur d'une part, ou d'autre part, une autre chaîne qui relie la roue dentée R-1 (20) avec le roue R-2 (21).

19. Conteneur-triturateur de ramassage sélectif de déchets ménagers selon la revendication 1 **caractérisé en ce qu'**il est prévu le placement d'un peigne, en dessous de chacun des quatre axes de lames (28 à 31), pour leur nettoyage permanent, avec la possibilité de rotation dans chacune de ses dents, autour de son axe longitudinal, avec l'assujettissement fixe au châssis (14) pour les axes supérieurs E-1 (28) et E-3 (31), tandis que pour le nettoyage des axes inférieurs E-2 (30) et E-4 (29) il est prévu que l'assujettissement des peignes à ces axes mobiles est au moyen d'une fourche directement fixée à ces axes, dont les peignes suivre aux axes de façon parallèle et permanente.

20. Conteneur-triturateur de ramassage sélectif de déchets ménagers selon la revendication 1 **caractérisé en ce qu'**il est prévu la disposition de quelques crochets (108) pour le ouverture et fermeture du récipient du conteneur (3) situés sous le bord inférieur du côté frontal du châssis (105), dont les crochets dépassant du châssis, ,en-dessous de celui-ci, quand le châssis est ouvert, tandis que pour sa fermeture, il est prévu que, avec l'abaissement du châssis, les crochets peuvent s'ajustée dans le creux prévu dans le bord supérieur du côte frontal du conteneur (107), restant fermé sous l'effet opprimant que produisent unes ressorts (106) sur ces "crochets", étant en même temps prévue la possibilité que la pression exercée par ces ressorts sur ces crochets, puisse être neutralisée par la pression opposée et ascendante d'un dent de peigne (110) sur ces gâchettes de désactivation (109) qui se trouvent en contact avec ces ressorts,

21. Conteneur-triturateur de ramassage sélectif de déchets ménagers selon la revendication 1 **caractérisé en ce qu'**il prévoit la disposition d'une bascule de poids en-dessous d'un plateau à placer au fond du conteneur, avec indicateur de poids dans une partie visible.

22. Conteneur-triturateur de ramassage sélectif de déchets ménagers selon la revendication 1 **caractérisé en ce qu'**il prévoit la possibilité de remise -à un centre de réception de données, (-au moyen le système d'alerte-message SMS de téléphonie mobile-) un avis de remplissage et du poids des déchets lorsque le récipient est plein, causé parce que l'élévation du côte frontal du châssis (14) -provoquée par son sur-remplissage-, provoque une "court-circuit", qui provoque un avis permanente, permettant d'organiser ses itinéraires de collecte à travers un programme de navigateur, type GPS...

23. Conteneur-triturateur de ramassage sélectif de déchets ménagers selon la revendication 1 **caractérisé en ce qu'**il prévoit que l'entraînement des tambours est provoqué à partir d'un moteur électrique (95) situé sur le châssis (14) de façon isolée au récipient (3), dont l'axe d'entraînement peut coïncider avec l'axe de chaque tambour latéral, ou l'entraînement du tambour peut être à travers un système de roues dentées.

24. Conteneur-triturateur de ramassage sélectif de déchets ménagers selon la revendication 1 **caractérisé en ce qu'**il prévoit que le moteur peut être situé dans la zone centrale du fond du récipient (3), dont les extrémités de son axe moteur peuvent déplacer tambours latéraux (10) par axes verticales avec têtes de transmission dentée conique, ou par l'intermédiaire des chaînes pour roues dentées, ou par courroies pour poulies de transmission latéral -, étant prévu, le placement d'un système de changement de vitesses ou de poulies afin de permettre leurs chaînes ou des courroies peuvent passer à partir du tambour à l'autre roue dentée / poulie identiques, disposés parallèlement au tambour, et laisser libérée tambours latéraux - et le châssis- de sa fixation à ces chaînes / poulies, étant prévu le placement d'une roue supplémentaire de tension de la course verticale de la chaîne / courroie qui qui lui donne la tension ou tolérance sollicitées

25. Conteneur-triturateur de ramassage sélectif de déchets ménagers selon la revendication 1 **caractérisé en ce qu'**il prévoit la variante de conteneur triturateur «domestique», caractérisée parce que ses dimensions sont plus petites que celui destiné à un usage sur la voie publique, mais comportant tous les revendications du modèle initial de conteneur, avec des identiques alternatives motrices de trituration (-manuelle et -électrique, -y compris un système mixte-) avec ses variantes: - «mobile» ou avec roues et -"fixe"(94), ou sans roues

26. Conteneur-triturateur de ramassage sélectif de déchets ménagers selon la revendication 1 **caractérisé en ce qu'**il est prévu une grille de sécurité, situé entre le couvercle et les lames, qui permet uniquement le passage de petits déchets, avec la prévision - dans sa alternative manuelle- d'un levier manuel destiné à freiner la rotation des axes de lames, situé près de la bouche du récipient, qui actionne une boulon de frein situé en dessous de la roue R-2 (90) avant de la zone d'entraînement ou contact avec la bande intérieure de roulement du tambour (84), et avec la prévision -dans le cas de l'alternative électrique- d'un commutateur dans la partie externe supérieure du conteneur, pour arrêter le moteur et d'enclencher la marche-arrière pour le deblocage.

27. Conteneur -triturateur de ramassage sélectif de déchets ménagers selon la revendication 1 **caractérisé en ce qu'**il prévoit, la variante de "multiple développement de rotation des lames triturateurs", au moyen de la placement d'une double roue dentée concentrique, qui fournit dans une de leurs visages le nombre double du dents (-... ou triple, ou quadruple, etc ... -) qui l'autre côté ont , dont le double roue dentée, est situé en un point intermédiaire du contact, entre las bandes lateraux de roulement droit et gauche (9) du côté inférieur de ladite couverture (1) et les bandes de roulement des tambours gauche et droite (10), de telle sorte que ladite roue dentée intermédiaire, vient en contact - par sa face avec moins dents- avec le couvercle (1), tandis que simultanément déplacer -a travers l'autre roue dentée concentrique de l'autre côté (-avec double our triple nombre de dents etc ..)- la bande de roulement du chaque tambour latéral (10), de sorte que chaque axe de lames (39 et 40) développe plus d'un tour, par chaque fois que le couvercle est ouvert.

## Claims

1. A Crushing container for the selective collection of domestic waste which possesses, in all the types planned for each kind of waste - (including a version for domestic ) a mechanism that contains: a rectangular frame (14) placed in the upper part of recipient - two lateral toothed drums (10) supported on the left and right sides of the frame, with the possibility to rotate around their own axes (17) - an upper sliding lid (1) with rails (with a toothed band) of rollers (9), located on the left and right sides of the lower part of the cover, which allows for contact with the teeth of the toothed outer bands (9) of each of the lateral drums ; - a device of gears (20, 25) located on the inside of each lateral drum, linked together in a cycloidal way, epicycloidal or eliptical way , the wheels of which are fixed at the ends of each axis, with the ability to interact with the internal teeth of these lateral drums; -some superior parallel axes (28, 31) of circular blades with their respective parallel blades (39), whose blades are arranged at right angles to its respective axis, designed to be in close contact to the waste; -some lower parallel axes (29, 30) with their respective lower parallel blades (40) likewise perpendicular to its axis, destined for the crushing of waste, each group of blades is arranged in parallel and each one interposed with others, with ability of rotation in opposite directions between them, and - a pedal mechanism (4,12,13, 7 and 8) to open the lid.

2. . Crushiing container for the selective collection of domestic waste according to claim 1 **characterized in that** its crushing drive mechanism possessed a curved sliding lid (1) that presents a toothed bands of rollers (9) located on the left and right sides on the underside of the sliding lid that are in contact with the toothed bands of rollers located on the outer cylinder side of each of the two lateral drums (9) with the ability of possible horizontal movement (16) of the sliding lid (1) towards the rear (-for opening-) allowing for rotation of its two lateral drums (10), supported by their respective axes (17), that are anchored on the left and right sides of the frame, whose axes are different from the laterals axes (6) around which revolves the sliding cover, and whose simultaneous two drums rotation causes a similar simultaneous rotation of axes of blades.

3. . Crushing container for selective collection of domestic waste according to claim 1 **characterized in that** there is envisaged a horizontal bar -pedal (4) located at the bottom of the front side of the container, linked by their left and right lateral ends to their respective side levers (12), whose levers pivot on their respective intermediate axes, supported over the left and right lateral walls of the container, and whose side levers possess at the other end of their respective toothed skids (13), which in turn are in contact with a small gear anchored on the left and right side walls of the container (8), where each small gear is fixed concentrically to each of the largest gears (8), which in turn are connected by its respective chain (7) to each one of the back corners left and right of the curved sliding lid, having envisaged a small toothed idler wheel (78) for protective support in each of the top back corners left and right of the container.

4. . Crushing container for selective collection of domestic waste according to claim 1 **characterized in that** there is envisaged the installation of two side drums (10) that revolve around their respective axes (17), embedded in the frame by mean their respective bearings (38) whose cylindrical faces internal and external of the mentioned drum, have toothed bands of rollers (9), and because the circular bottom wall of each drum has a guide area of "semicircular perforated bands" to allow the passage of axial blades (18 and 19) through the bottom wall.

5. . Crushing container for selective collection of domestic waste according to claim 1 **characterized in that** there is envisaged the installation of a frame (14), which consists of a type of rectangular box of limited height, without base nor lid, which is located near the higher fringe of the interior of the container, linked to the container by means of hinges (41) located at the top of the back wall of the container , whose function is to give support to its side walls left and right, the side drums, and the axial blades , through their respective bearings.

6. . Crushing container for selective collection of domestic waste according to claim 1 **characterized in that** there is envisaged the establishment of gears (20, 21, 22 and 23) at the ends left and right of each axis of blades (28, 29,30 and 31-) at the height of the inside face of each lateral drum, whose axes of blades can be driven by these gears that are under the action of rotation of the two side drums (10).

7. . Crushing container for selective collection of domestic waste according to claim 1 **characterized in that** there is envisaged that the subjection of circular blades to its axis can be mobile or swivel, and no fixed, by means of circular spring located in its area of axial support (47), which is fixed the blade by one end, while the other end of the spring has the function of supporting the final push of the cam (48) of the axis, if its axis (50) rotate, whose anti-lock system can incorporate a different type of spring for each type of waste, and the possibility of adjusting the length of the race of the said circular spring by screwing of adjustable shape in its circular housing.

8. . Crushing container for selective collection of domestic waste according to claim 1 **characterized in that** there is envisaged that the subjection of the circular blade to its axis is not fixed but mobile in a second sense, by the possibility that the blade can vary in a way oblique - lateral (50-51) with respect to the plane perpendicular to the axis on which the blade is positioned, what is caused because each blade can pivoted over each of the spherical basis that provide the axis at each point of subjection of each blade , whose second anti-lock system can incorporate a series of stabilisers springs (49) placed around the axis , between their respective blades.

9. . Crushing container for selective collection of domestic waste according to claim 1 **characterized in that** there is envisaged - as a variety of blades - a circular blades for trituration of metal containers (52 and 53) whose teeth have rounded and robust edges, with six claws in the upper circular blades and four claws in the circular blades of the lower axes.

10. . Crushing container for selective collection of domestic waste according to claim 1 **characterized in that** there is envisaged - as a variety of blades - a circular blades for the trituration of plastic containers (54 and 55) whose teeth have a sharp edges, with twelve claws in the upper circular blades and twelve claws in the circular blades of the lower axes.

11. . Crushing container for selective collection of domestic waste according to claim 1 **characterized in that** there is envisaged - as a variety of blades - a circular blades for trituration of tetra-bricks (56 and 57) whose teeth have a sharp edges, with twelve claws in the circular blades of the upper axes, and sixteen claws in the circular blades of the lower axes.

12. . Crushing container for selective collection of domestic waste according to claim 1 **characterized in that** there is envisaged - as a variety of blades - a circular blades for trituration of paper and cardboard (58 and 59) that have the traditional saw-tooth.

13. . Crushing container for selective collection of domestic waste according to claim 1 **characterized in that** there is envisaged - as a variety of blades - a circular blades for trituration of organic matter (60 and 61) with a section of some centimeters in width, whose edge is serrated (62), having been laid down that its circular blades are separated by rubber rollers (63) lodged between the circular blades of each axis.

14. . Crushing container for selective collection of domestic waste according to claim 1 **characterized in that** there is envisaged - as a variety of blades - a circular blades for trituration of glass containers (64-67) which have a series of small hammers (65) linked to its disk by their respective articulated arms in each quadrangular sector of the disc, configured in manner of echelons (66) in the form of "spiral staircase" or propeller.

15. . Crushing container for selective collection of domestic waste according to claim 1 **characterized in that** there is envisaged - as a variety of blades - a lower circular blades for the trituration of waste not recyclable (69) containing a mixture of the first four types of circular blades above cited, with the inclusion of each of these four types of blade edge on a rotational basis, in every quadrangular sector of each circular blade (70), by combining the location of each blade in its respective axis, alternating its position of placement in a rotary way for each circular sector, blades characterized because they have a configuration not circular but oval (71), and because its rotation is carried out on an "eccentric" point of pivot, and at the same time its rotation is solidary and synchronous with respect to the other oval blade installed on the opposite axis, which is in constant contact, despite its identical oval shape, because this second blade -also with eccentric rotation-, pivots over a pivot point with opposite focal presentation of 90 degrees with respect to the first.

16. . Crushing container for selective collection of domestic waste according to claim 1 **characterized in that**, there is envisaged that bearings (15) on which the blades axes are rotating, incorporate a function of ratchet (both in the bearings (15) located between axes of blades and the frame, like in bearings located between each blades axis, and the gears that engage with each drum-) whose bearings with ratchet function only transmits to each blades axes the movement of rotation - caused by the drums, through their respective gears - only in the direction of swallowed of waste, towards the middle of the container.

17. . Crushing container for selective collection of domestic waste according to claim 1 **characterized in that**, there is envisaged that the rotation of drums (10) and of blades axes (28, 29, 30 and 31) - is produced by the movement of the sliding lid of the container (1) when we attract this cover to us, to its original position, (- to close lid), - having been envisaged a second lid type "visor" (2) which is suspended vertically from a hinge at 360 ° at the front end of the sliding lid in the closed position, acting as a safety skirt at the height of the area of crushing, which prevents the function of grinder when the sliding lid is at the end of his path of opening, until this visor lid has been closed, and the inputted waste has been covered.

18. . Crushing container for selective collection of domestic waste according to claim 1 **characterized in that**, there is envisaged the placement of a system of "resistant" springs (72), consisting of a box located on the side walls of the frame, that contains two springs (76) positioned perpendicular to the direction of lower blade axes (73, 74) whose function is to give wider path, and bring stability to the ends of each lower axis, being envisaged also the existence of a safety chain (11) that connects the gear R-3-(22) of the upper axis, with the gear R-4 (23) of the inferior axis on the one hand, and on the other hand, another chain that joins the gear R-1 (20) with the wheel R-2 (21).

19. . Crushing container for selective collection of domestic waste according to claim 1 **characterized in that**, there is envisaged the placement of a comb below each of the four axes of blades (28-31), for their continual cleaning, with the ability of rotation in each of their teeth with respect to its longitudinal axis, with fastenings fixed to the frame (14) for the upper axes E-1 (28) and E-3 (31), while, for the cleaning of inferior axes E-2 (30) and E-4 (29), there is envisaged that the fixing of combs to the mobile axes is by a fork, fixed directly to these axes, whose combs follow the axes, of parallel permanently and way.

20. . Crushing container for selective collection of domestic waste according to claim 1 **characterized in that**, there is envisaged the placement of hooks (108) for the opening and closing of the container receptacle (3), below the lower edge of the front side of the frame (105), whose hooks jut out from the frame, below this latter, when the frame is open , while, for its closure, are planned that, with the lowering of the frame, the hooks can be embedded in the hollow planned in the top edge of the front side of the container (107), which can be closed by the pressure effect produced by a springs (106) on these "hooks", having been laid down at the same time the possibility that the pressure exerted by these springs on these hooks can be neutralized by opposite pressure and ascending of a tooth comb (110) on the trigger of disabling (109) that are in contact with these springs.

21. . Crushing container for selective collection of domestic waste according to claim 1 **characterized in that**, there is envisaged the placement of a weight scale under a tray, located at the bottom of the container, with a weight indicator, in a visible portion

22. . Crushing container for selective collection of domestic waste according to claim 1 **characterized in that**, there is envisaged the possibility of remission to a Center for receiving data ( through the system of SMS alert messages from a mobile phone-) of a notice of overfilled and weight of waste, when the container is full, caused because the elevation of the front side of the frame (14) - caused by its overfilling - causes a "short-circuit", causing a permanent warning, allowing to organize its collection routes through a GPS navigation program.

23. . Crushing container for selective collection of domestic waste according to claim 1 **characterized in that**, there is envisaged that the motion of drum is caused by an electric motor (95) located on the frame (14) isolated with respect the container (3), whose drive axis can match with each lateral drum axis or the motion of drum can be through a system of gears.

24. . Crushing container for selective collection of domestic waste according to claim 1 **characterized in that**, there is envisaged that the motor can be located in the central area of the bottom of the container (3), whose drive ends of its axis can move lateral drums (10) by mean of vertical axes with heads of conical toothed transmission, or by chains for gears, or by using straps for pulleys of lateral transmission, there is been envisaged the placement of a system of change of gears or pulleys to allow their chains or straps can pass from the drum to another gears / pulley identical, arranged parallel to the drum, and allow the release of the side drums - and frame - of its fixing to these chains or pulleys, there is been envisaged for the placement of an additional wheel to tense the vertical displacement of the chain /strap that gives the tension or requested tolerance

25. . Crushing container for selective collection of domestic waste according to claim 1 **characterized in that**, there is envisaged the variant of "domestic crushing container", characterized because its dimensions are smaller than the that intended for use on public roads, although it has all the attributes of initial container model, with identical drive alternatives of crushing (-manual and electric, including a mixed system-) with its variants:-"mobile" or with wheels, and - "fixed" (94), or without wheels.

26. . Crushing container for selective collection of domestic waste according to claim 1 **characterized in that**, there is envisaged a safety grill, located between the lid and the blades, which only allows the passage of small residues, with forecast - in its manual alternative - of a manual lever for braking the rotation of blades axes, located near the mouth of the container that activates a brake bolt, located below the wheel R-2 (90) front the area of contact with the raceway inner band of the drum (84), and with forecast - in case of the electric alternative - of a switch on the top outside of container, to stop the motor or to engage the reverse gear, for its unlocking.

27. . Crushing container for selective collection of domestic waste according to claim 1 **characterized in that**, there is envisaged the variant of "multiple rotational development of crushing blades" through the placement of a double concentric gear that has double the number of teeth on one of its faces (-... or triple, or quadruple, etc...) that the other side has, whose double gear is located in an intermediate point of contact between the lateral bands of roller right and left (9) of the underside of the lid (1), and the roller bands of the right and left drums (10), so that the intermediate gear, makes contact - by its face with less teeth - with the lid (1), while simultaneously it moves - through the other concentric gear of its other side (-with double or triple number of teeth, etc...)- the roller band of each lateral drum (10), so that, each blades axis (39 and 40) develops more than one revolution, for every time that the lid is opened.

## Patentansprüche

1. Häckselcontainer für Hausmüll mit selektiver Aufnahme der, in allen Ausfertigungen für jede Art von Müll - einschließlich der Variante des Haushäckselcontainers-, einen Mechanismus aus folgenden Grundelementen besitzt: Ein viereckiger Rahmen (14) im oberen Teil des Containerbehälters, - zwei auf die rechte und linke Wand dieses Rahmens gestützte gezähnte Seitentrommeln (10), die sich über ihre eigene Achse drehen können.
,45s (17) - Ein oberer verschiebbarer Deckel (1) mit abrollenden Zahnradlaufschienen (9) auf der rechten und linken Innenseite der Abdeckung, die mit den Zähnen der äußeren Laufbänder (9) jeder der beiden Seitentrommein interagieren können;- Ein Mechanismus aus zykloid oder in Form eines Planetengetriebes miteinander verbundenen Zahnrädern (20, 25) im Inneren jeder Seitentrommel, wobei die Räder an den Enden jeder Achse befestigt sind und mit den Innenzähnen der Seitentrommeln interagieren können; - obere parallele Achsen (28, 31) mit kreisförmigen Schneiden und ihren jeweiligen Gegenschneiden (39), deren Messer senkrecht auf ihrer jeweiligen Achse stehen und zur Zuführung des Mülls dienen; - untere parallele Achsen (29,30) mit kreisförmigen Schneiden und ihren jeweiligen Gegenschneiden (40), deren Messer ebenfalls senkrecht auf ihrer jeweiligen Achse stehen und den Müll zerkleinern, wobei jede Messergruppe parallel und übereinanderliegend angeordnet ist und gegeneinander gedreht werden kann, sowie ein pedalgetriebener Mechanismus (4,12,13, 7 und 8) zum Öffnen des Deckels.

2. Häckselcontainer für Hausmüll mit selektiver Aufnahme, nach Patentanspruch 1, **gekennzeichnet durch** einen Häckselantriebsmechanismus mit geschwungenem Schiebedeckel (1), der Zahnradlaufbänder (9) auf der rechten und linken Innenseite des Deckels besitzt, welche die Zahnradlaufbänder auf den zylinderförmigen Außenseiten jeder der beiden Seitentrommeln (9) berühren, wobei eine eventuelle horizontale Verschiebung (16) des oben genannten Deckels (1) nach hinten (zu dessen Öffnung) die Rotationsbewegung seiner beiden von ihren jeweiligen Achsen (17) gestützten Seitentrommeln (10) auslösen kann, die an der linken und rechten Seitenwand des Rahmens verankert sind und deren Achsen sich von den Seitenachsen (6) unterscheiden, um die sich der Schiebedeckel dreht, und deren eventuelle gleichzeitige Drehbewegung der beiden Trommeln die gleichzeitige Drehbewegung aller Schneidachsen auslösen kann.

3. Häckselcontainer für Hausmüll mit selektiver Aufnahme, nach Patentanspruch 1, **gekennzeichnet durch** eine horizontale Pedalstange (4) im Inneren der Vorderseite des Containers, die über ihre linken und rechten Enden mit ihren jeweiligen Seitenhebeln (12) verbunden ist, deren Hebel sich auf ihren jeweiligen mittleren Achsen drehen, welche sich auf die rechten und linken Seitenwand des Containers stützen, und deren Seitenhebel an ihrem anderen Ende ihre jeweilige Zahnradkufe (13) besitzen, die wiederum kleinere, an der rechten und linken Seitenwand des Containers verankerte Zahnräder (8) berührt, wobei jedes kleinere Zahnrad konzentrisch an jedem größeren Zahnrad (8) befestigt ist, das wiederum durch seine jeweilige Kette (7) mit jeder der linken und rechten hinteren Ecken des geschwungenen Schiebedeckels in Verbindung steht, wobei an beiden oberen hinteren rechten und linken Ecken des Containers ein kleines freidrehendes Zahnrad (78) passiv befestigt ist.

4. Häckselcontainer für Hausmüll mit selektiver Aufnahme, nach Patentanspruch 1, **gekennzeichnet durch** den vorgesehenen Einbau von zwei Seitentrommeln (10) die sich um ihre jeweiligen Achsen (17) drehen, welche **durch** ihre jeweiligen Gleitlager (38) in den Rahmen eingebaut sind, wobei die zylindrische Innen- und Außenweite besagter Trommeln mit Zahnradlaufschienen (9) versehen sind, und wobei der kreisförmige Boden jeder Trommel einen Führungsschiene oder "halbkreisförmige perforierte Schiene" aufweist, **durch** welche die Schneidachsen (18 und 19) den Trommelboden passieren können.

5. Häckselcontainer für Hausmüll mit selektiver Aufnahme, nach Patentanspruch 1 **gekennzeichnet durch** den vorgesehenen Einbau eines Rahmens (14), der aus einer Art rechteckigem Kasten von reduzierter Höhe ohne Boden oder Deckel besteht, der sich am oberen Teil des Containerinneren befindet, über am oberen Teil der oberen Wand des Containers angebrachte Scharniere (41) mit dem Behälter des Containers verbunden ist und der auf seinen rechten und linken Seitenwänden die Seitentrommeln und die Schneidachsen durch ihre jeweiligen Gleitlager stützen soll.

6. Häckselcontainer für Hausmüll mit selektiver Aufnahme, nach Patentanspruch 1 **gekennzeichnet durch** die vorgesehene Anbringung von Zahnrädern (20, 21, 22 und 23) am rechten und linken Ende jeder Schneidachse (28, 29, 30 und 31) auf der Höhe der Innenseite jeder Seitentrommel, deren Schneidachsen **durch** die oben genannten Zahnräder angetrieben werden können, die unter der Drehwirkung der zwei Seitentrommeln (10) stehen.

7. Häckselcontainer für Hausmüll mit selektiver Aufnahme, nach Patentanspruch 1 **gekennzeichnet durch** die vorgesehene bewegliche oder drehbare, nicht feste Authängug der kreisförmigen Messer mit Hilfe einer kreisförmigen Feder an der Axialaufhängung (47), die über eines ihrer Enden an besagter Schneide befestigt ist und gleichzeitig das andere Ende der Feder den endgültigen Schub der Nocke (48) der Achse tragen soll, wenn ihre Achse (50) sich dreht; in dessen Antiblockiersystem für jede Art von Müll eine andere Art von Feder eingebaut werden kann; und bei dem die Möglichkeit besteht, die Lauflänge der oben genannten kreisförmigen Feder **durch** verstellbare Verschraubung in ihrem kreisförmigen Lager einzustellen.

8. Häckselcontainer für Hausmüll mit selektiver Aufnahme, nach Patentanspruch 1 **gekennzeichnet durch** die vorgesehene, in eine zweite Richtung bewegliche Aufhängung der kreisförmigen Schneide an ihre Achse, die **dadurch**, dass diese Schneide sich schräg-seitlich (50 51) gegenüber der Lotrechten der Achse in der sich die Schneide befindet, schwingen kann. Dies ist möglich, weil jede Schneide sich um jede der kugelförmigen Basen drehen kann, welche die Achse an jeder Stütze der Schneiden besitzt. Das zweite Antiblockiersystem kann mit stabilisierenden Federn (49) versehen werden, die zwischen die jeweiligen Messerklingen um die Achse herum angebracht werden.

9. Häckselcontainer für Hausmüll mit selektiver Aufnahme, nach Patentanspruch 1 **gekennzeichnet durch** die vorgesehene Anbringung - als Schneidvariante - von kreisförmigen Schneidkline:en zum Häckseln von Metallverpackungen (52 und 53), deren Zähne mit stumpfen und robusten Rändern versehen sind, wobei sich sechs Klauen an den kreisförmigen Messerschneiden der oberen Achsen und vier Klauen an den kreisförmigen Messerschneiden der unteren Achsen befinden.

10. Häckselcontainer für Hausmüll mit selektiver Aufnahme, nach Patentanspruch 1 **gekennzeichnet durch** die vorgesehene Anbringung - als Schneidvariante - von kreisförmigen Schneidklingen zum Häckseln von Plastikverpackungen (54 und 55), deren Zähne mit scharfen Rändern versehen sind, mit zwölf Klauen an den kreisförmigen Messerschneiden der oberen Achsen und zwölf Klauen an den kreisförmigen Messerschneiden der unteren Achsen.

11. Häckselcontainer für Hausmüll mit selektiver Aufnahme, nach Patentanspruch 1 **gekennzeichnet durch** die vorgesehene Anbringung - als Schneidvariante - von kreisförmigen Schneidklingen zum Häckseln von Tetrapaks (56 und 57), deren Zähne mit scharfen Rändern versehen sind, mit zwölf Klauen an den kreisförmigen Messerschneiden der oberen Achsen und sechzehn Klauen an den kreisförmigen Messerschneiden der unteren Achsen.

12. Häckselcontainer für Hausmüll mit selektiver Aufnahme, nach Patentanspruch 1 **gekennzeichnet durch** die vorgesehene Anbringung - als Schneidvariante - von kreisförmigen Schneidklingen zum Häckseln von Papier und Karton (58 und 59) mit traditioneller Sägezähnung.

13. Häckselcontainer für Hausmüll mit selektiver Aufnahme, nach Patentanspruch 1 **gekennzeichnet durch** die vorgesehene Anbringung - als Schneidvariante - von kreisförmigen Schneidklingen zum Häckseln von Biomüll (60 und 61) mit einem Bereich von einigen Zentimetern Breite, dessen Rand (62) gezähnt ist, wobei eine Trennung seiner kreisförmigen Schneiden **durch** zwischen die kreisförmigen Schneiden jeder Achse eingeschobenen Gummirollen (63) vorgesehen ist.

14. Häckselcontainer für Hausmüll mit selektiver Aufnahme, nach Patentanspruch 1 **gekennzeichnet durch** die vorgesehene Anbringung - als Schneidvariante - von kreisförmigen Schneidklingen zum Häckseln von Glasbehältern (64 bis 67) mit einer Reihe von kleinen Hämmern (65), die **durch** ihre jeweiligen gegliederten Arme an jeden viereckigen Teil ihrer Scheibe angebracht sind und stufenförmig (66) in Form einer Wendeltreppe angeordnet sind.

15. Häckselcontainer für Hausmüll mit selektiver Aufnahme, nach Patentanspruch 1 **gekennzeichnet durch** die vorgesehene Anbringung - als Schneidvariante - von kreisförmigen Schneidklingen zum Häckseln von Restmüll (69) mit einer Kombination der vier ersten, vorher beschriebenen Schneidklingenarten, wobei jede der vier Arten drehbar in den viereckigen Teil jeder kreisförmigen Schneide (70) eingesetzt ist. Die Position jeder Schneide an ihrer jeweiligen Achse wird dabei ausgetauscht, wobei sich diese Schneiden **durch** eine ovale (71) anstelle einer kreisförmigen Form und **durch** ihre Rotation auf einem "exzentrische" und gleichzeitig gegenüber der anderen ovalen Schneide an der gegenüberliegenden Achse alleinstehenden und synchronen Drehpunkt auszeichnen. Die Schneide ständig diese ebenfalls oval geformte Schneide, die sich exzentrisch auf einem fokalen, um 90° zur ersten Schneide versetzt stehenden Punkt dreht.

16. Häckselcontainer für Hausmüll mit selektiver Aufnahme, nach Patentanspruch 1 **gekennzeichnet durch** die vorgesehene Anbringung von Gleitlagern (15), auf denen sich die Schneidachsen drehen, und welche eine Sperrfunktion enthalten (sowohl in den Gleitlagern (15) zwischen den Schneidachsen und dem Rahmen als auch in den Gleitlagern zwischen jeder Schneidachse und den in jede Seitentrommel greifenden Zahnrädern), deren Gleitlager mit Sperrfunktion nur jeder Schneidachse die **durch** die Trommel verursachte Drehbewegung über ihre jeweiligen Zahnräder nur in der Einzugsrichtung des Mülls in die Behältermitte weitergeben.

17. Häckselcontainer für Hausmüll mit selektiver Aufnahme, nach Patentanspruch 1 **gekennzeichnet durch** die vorgesehene Anbringung von Trommeln (10) und Schneidachsen (28, 29, 30 und 31) - deren Drehbewegung **durch** die Verschiebung des Schiebedeckels des Containers (1) hervorgerufen wird, wenn man den Deckel zu sich her in seine Ausgangsposition zurückzieht, (um den Deckel zu schließen), - wobei ein zweiter Deckel in der Art eines "Visiers" (2) vorgesehen ist, der in geschlossener Position vertikal an einem am Vorderende des Schiebedeckels befindlichen 360°-Scharnier hängt und als Sicherheitsvorrichtung auf der Höhe des Häckselbereichs dient, indem er verhindert, dass der Häckselvorgang beim Schließen des Schiebedeckels ausgelöst wird, bevor der "Visier"-Deckel heruntergefahren und die Müllöffnung geschlossen sind.

18. Häckselcontainer für Hausmüll mit selektiver Aufnahme, nach Patentanspruch 1 **gekennzeichnet durch** die vorgesehene Anbringung eines Systems "nachgiebiger" Federn (72), bestehend aus einem Kasten an den Seitenwänden des Rahmens, der zwei Federn (76) enthält, welche senkrecht zur Richtung der inneren Schneidachsen (73, 74) stehen, den Durchgang verbreitern und den Enden jeder Innenachse größere Stabilität verleihen sollen, wobei auch die Existenz einer Sicherheitskette (11) vorgesehen wird, welche einerseits das Zahnrad R-3 (22) der oberen Achse mit dem Zahnrad R-4 (23) einer Achse verbindet, und anderseits eine andere Kette mit dem Zahnrad R-1 (20) mit dem Rad R-2 (21) verbindet.

19. Häckselcontainer für Hausmüll mit selektiver Aufnahme, nach Patentanspruch 1 **gekennzeichnet durch** die vorgesehene Anbringung eines Kamms unter jeder der vier Schneidachsen (28-31) zu deren ständigen Reinigung, wobei jeder seiner Zinken um seine Längsachse drehbar ist, und der fest am Rahmen (14) sitzt, für die oberen Achsen E-1 (28) und E-3 (31), während für die Reinigung der unteren Achsen E-2 (30) und E-4 (29) die Befestigung der Kämme an diesen beweglichen Achsen über eine direkt an diese Achsen befestigte Gabel geschieht, wobei die Kämme ständig parallel an den Achsen entlang fahren.

20. Häckselcontainer für Hausmüll mit selektiver Aufnahme, nach Patentanspruch 1 **gekennzeichnet durch** die vorgesehene Anbringung von mehreren Haken (108) zur Öffnung und Schließung des Containerbehälters (3), angebracht unterhalb des Innenrands der Vorderseite des Rahmens (105), deren Haken bei geöffnetem Rahmen unten aus demselben hervorragen, wohingegen für den geschlossenen Rahmen beim Absenken des Rahmens ein Einrasten der Haken in die vorgesehene Öffnung am oberen Rand der Vorderseite des Containers (107) vorgesehen ist, bei dem der Behälter **durch** den Druck einiger auf diesen "Haken" angebrachter Federn (106) geschlossen wird. Gleichzeitig soll der von diesen Federn ausgeübte Druck **durch** den nach oben gerichteten Druck eines Kammzinkens (110) auf die diese Federn berührende Ausschalthebel (109) aufgehoben werden können.

21. Häckselcontainer für Hausmüll mit selektiver Aufnahme, nach Patentanspruch 1 **gekennzeichnet durch** die vorgesehene Anbringung einer Waage unter einem Tablett auf dem Boden des Containers, mit sichtbarer Gewichtsanzeige.

22. Häckselcontainer für Hausmüll mit selektiver Aufnahme, nach Patentanspruch 1 **gekennzeichnet durch** die vorgesehene Möglichkeit, (per SMS) an ein Datenaufnahmezentrum eine Benachrichtigung über Füllstand und Gewicht des Containers bei gefülltem Container zu senden. Dies geschieht **durch** den Anhub des Vorderteils des Rahmens (14) bei dessen Überfüllung, der einen "Kurzschluss" produziert. **Dadurch** wird ein Daueralarm auslöst, **durch** den die Route für das Leeren des Containers **durch** ein Navigationssystem organisiert werden kann.

23. Häckselcontainer für Hausmüll mit selektiver Aufnahme, nach Patentanspruch 1 **gekennzeichnet durch** den vorgesehene Antrieb der Trommeln **durch** einen isoliert vom Behälter (3) auf dem Rahmen (14) angebrachten Elektromotor (95), bei dem die Triebachse entweder mit der Achse jeder Seitentrommel zusammenfallen oder die Trommel **durch** ein Zahnradsystem angetrieben werden kann.

24. Häckselcontainer für Hausmüll mit selektiver Aufnahme, nach Patentanspruch 1 **gekennzeichnet durch** die vorgesehene Positionierung des Motors in der Mitte des unteren Bereichs des Containers (3), dessen bewegliche Enden seiner Achse die Seitentrommeln (10) über senkrechte Achsen mit konisch gezähnten Übertragungsköpfen oder Zahnradketten oder Keilriemen bewegen können. Vorgesehen ist auch die Anbringung eines Schaltsystems mit Hilfe von Ritzeln oder Rollen, damit die Ketten oder Riemen von der Trommel zu einem anderen, identischen Zahnrad / Rolle laufen können, das parallel zur Trommel liegt, und so die Seitentrommeln - und der Rahmen - von diesen Ketten oder Rollen abgenommen werden können; ein zusätzliches Rad soll der Vertikalverschiebung der Kette / des Riemens die nötige Spannung oder Entspannung geben.

25. Häckselcontainer für Hausmüll mit selektiver Aufnahme, nach Patentanspruch 1 **gekennzeichnet durch** die vorgesehene Variante "Haushäckselcontainer", der kleiner als der für die Straße vorgesehene Container ist, aber alle Patentansprüche des ursprünglichen Containermodells enthält, mit identischen beweglichen Häckselalternativen (handbetrieben und elektrisch, einschließlich eines kombinierten Systems), und mit den Varianten: - "beweglich" oder mit Rädern und - "feststehend" (94) oder ohne Räder.

26. Häckselcontainer für Hausmüll mit selektiver Aufnahme, nach Patentanspruch 1 **gekennzeichnet durch** die vorgesehene Anbringung eines Sicherheitscitters zwischen Deckel und Schneiden, das nur kleine Müllobjekte durchlässt, unter - bei der handbetriebenen Version - Anbringung eines Handhebels zum Stoppen der Rotation der Schneidachsen in der Nähe der Behälteröffnung, der einen unterhalb des Rads R-2 (90) vor dem Häcksel- oder Kontaktbereich mit dem inneren Laufband der Trommel (84) angebrachten Bremsbolzen betätigt, und unter - bei der elektrischen Version - Anbringung eines Stoppschalters am oberen Teil des Behälters zum Anhalten des Motors und zum Einlegen des Rückwärtsgangs zur Entsperrung.

27. Häckselcontainer für Hausmüll mit selektiver Aufnahme, nach Patentanspruch 1 **gekennzeichnet durch** die vorhergesehene Variante einer "Mehrfachentwicklung" der Rotation der Häckselmesser", **durch** die Anbringung eines konzentrischen Doppelzahnrads, das an einer seiner Seiten die doppelte (oder dreifache, vierfache etc.) Anzahl Zähne als an der anderen Seite besitzt, und sich an einem Berührungspunkt zwischen den rechten und linken Laufbändern (9) der Innenseite des Deckels (1) und den Laufbändern der linken und rechten Trommeln (10) befindet, so dass dieses zwischengeschaltete Zahnrad - mit seiner mit wenigen Zähnen besetzten Seite - mit dem Deckel (1) in Kontakt tritt, während es gleichzeitig - **durch** die konzentrische Zahnreihe der anderen Seite (mit zwei- oder dreifacher Anzahl Zähne)- das Laufband jeder Seitentrommel (10) bewegt, damit alle Schneidachsen (39 und 40) bei jedem Öffnen des Deckels mehr als eine Umdrehung durchführen.
